# EUROPEAN PATENT SPECIFICATION

(11) **EP 4 394 615 B1**
(45) Date of publication and mention of the grant of the patent: **26.11.2025**
(21) Application number: 23216064.8
(22) Date of filing: 12.12.2023
(51) Int. Cl.: H04L 9/06, G06F 15/173, G06F 15/82

(54) **FLEXIBLE DATA STREAM ENCRYPTION/DECRYPTION ENGINE FOR STREAM-ORIENTED NEURAL NETWORK ACCELERATORS**
FLEXIBLE DATENSTROMVERSCHLÜSSELUNGS-/ENTSCHLÜSSELUNGS-ENGINE FÜR STROMORIENTIERTE NEURONALE NETZWERKBESCHLEUNIGER
MOTEUR FLEXIBLE DE CHIFFREMENT/DÉCHIFFREMENT DE FLUX DE DONNÉES POUR ACCÉLÉRATEURS DE RÉSEAU NEURONAL ORIENTÉ FLUX

(30) Priority: 29.12.2022 US 202263477749 P; 28.02.2023 US 202318176315
(43) Date of publication of application: 03.07.2024
(73) Proprietor: STMicroelectronics S.r.l., 20864 Agrate Brianza (MB) (IT); STMicroelectronics International N.V., 1228 Plan-les-Ouates, Geneva (CH)
(72) Inventor: GIRARDI, Francesca, 20811 Cesano Maderno (Monza Brianza) (IT); DESOLI, Giuseppe, 22042 San Fermo della Battaglia (Como) (IT); SUSELLA, Ruggero, 20132 Milano (IT); BOESCH, Thomas, 6821 Rovio (CH); ZAMBOTTI, Paolo Sergio, 20132 Milano (IT)
(74) Representative: Buzzi, Notaro & Antonielli d'Oulx S.p.A.

(56) References cited:
- US-A1- 2015 074 337
- US-A1- 2019 114 400
- US-B2- 9 081 724
- SANTOSH GHOSH ET AL: "A >100 Gbps Inline AES-GCM Hardware Engine and Protected DMA Transfers between SGX Enclave and FPGA Accelerator Device", vol. 20200214:082348, 13 February 2020 (2020-02-13), pages 1 - 21, XP061035130, Retrieved from the Internet <URL:http://eprint.iacr.org/2020/178.pdf> [retrieved on 20200213]

## Description

### BACKGROUND

### Technical Field

The present disclosure relates to stream-oriented convolutional accelerators, such as convolutional accelerators used in a learning/inference machine (e.g., an artificial neural network - ANN, such as a convolutional neural network - CNN).

### Description of the Related Art

Various computer vision, speech recognition, and signal processing applications may benefit from the use of learning/inference machines, which may quickly perform hundreds, thousands, or even millions of concurrent operations. Learning/inference machines, as discussed in this disclosure, may fall under the technological titles of machine learning, artificial intelligence, neural networks, probabilistic inference engines, accelerators, and the like.

Such learning/inference machines may include or otherwise utilize CNNs, such as deep convolutional neural networks (DCNN). A DCNN is a computer-based tool that processes large quantities of data and adaptively "learns" by conflating proximally related features within the data, making broad predictions about the data, and refining the predictions based on reliable conclusions and new conflations. The DCNN is arranged in a plurality of "layers," and different types of predictions are made at each layer. Hardware accelerators including stream-oriented accelerators are often employed to accelerate the processing of large amounts of data by a DCNN.

The data streamed may include input data and trained weights, both of which may be considered to be confidential information, raising security issues. In addition, the topology of the neural network may be considered confidential information.

Document US 2015/074337 A1 discusses a data storage device facilitating multi-stream data exchange with a host and comprising nonvolatile memory, buffer memory for temporary data storage, and a storage controller, wherein the controller processes host access commands to read or write specific data segments in the nonvolatile memory, wherein access-requested data segments are temporarily stored in the buffer memory.

Document US 2019/114400 A1 discusses an electronic device including non-volatile memory and a digital circuit with a microprocessor and a decryption circuit, wherein the decryption circuit decrypts data blocks from the memory on the fly for secure processing, wherein it uses decryption masks for current and predicted memory read addresses.

Document US 9 081 724 B2 discusses a method of protecting digital data in a storage medium using two addressable storage regions and a selector to mark one as active, wherein initially data is encrypted with a first key and stored in the first region, which is marked active and upon a trigger event, the data is copied to the second region, encrypted with a second key.
GHOSH, SANTOSH, ET AL.: "A >100 GBPS INLINE AES-GCM HARDWARE ENGINE AND PROTECTED DMA TRANSFERS BETWEEN SGX ENCLAVE AND FPGA ACCELERATOR DEVICE", IACR EPRINT ARCHIVE, 2020, HTTPS://EPRINT.IACR.ORG/2020/178.PDF DISCUSSES A METHOD TO SECURE DMA DATA TRANSFERS FOR OFFLOADING COMPUTATIONS TO AN ACCELERATOR, WHERE THE APPROACH OUTLINES AN END-TO-END PROTECTION SCHEME FOR COMMUNICATION BETWEEN AN SGX ENCLAVE AND AN FPGA ACCELERATOR, OPTIMIZED FOR BANDWIDTH AND LATENCY. BRIEF SUMMARY

In an embodiment, a hardware accelerator comprises a plurality of functional circuits, a plurality of streaming engines, and an interface. The plurality of streaming engines are coupled to the plurality of functional circuits. In operation, the plurality of streaming engines generate data streaming requests to stream data to and from functional circuits of the plurality of functional circuits. The interface is coupled to the plurality of streaming engines. The interface, in operation, performs stream cipher operations on data words associated with the data streaming requests. The performing a stream cipher operation on a data word includes generating a mask based on an encryption ID associated with a streaming engine of the plurality of streaming engines, an address associated with the data word, and a stored key associated with the streaming engine, and XORing the generated mask with the data word.

In an embodiment, a system comprises a host device and a hardware accelerator. The hardware accelerator includes a stream switch, a plurality of functional circuits, a plurality of streaming engines, and an interface. The stream switch, in operation, selectively couples streaming engines of the plurality of streaming engines to functional circuits of the plurality of functional circuits. The interface, in operation, selectively couples streaming engines of the plurality of streaming engines to the host device. The interface, in operation, performs stream cipher operations on data words associated with data streamed between the host device and a streaming engine of the plurality of streaming engines. The performing a stream cipher operation on a data word includes: generating a mask based on an encryption ID associated with a streaming engine of the plurality of streaming engines, an address associated with the data word and a stored key associated with the streaming engine; and XORing the generated mask with the data word.

In an embodiment, a method comprises: streaming data streams between streaming engines of a plurality of streaming engines of a hardware accelerator and functional circuits of a plurality of functional circuits of the hardware accelerator; and streaming data streams between a host device and streaming engines of the plurality of streaming engines of the hardware accelerator via an interface of the hardware accelerator. The streaming of a data stream between the host device and a streaming engine of the plurality of streaming engines includes performing stream cipher operations on data words of the data stream. The performing a stream cipher operation on a data word includes: generating a mask based on an encryption ID associated with the streaming engine of the plurality of streaming engines, an address associated with the data word, and a stored key associated with the streaming engine of the plurality of streaming engines; and XORing the generated mask with the data word.

In an embodiment, a non-transitory computer-readable medium's contents configure an interface of a hardware accelerator to stream data streams between streaming engines of a plurality of streaming engines of the hardware accelerator and a host system. The streaming of a data stream between a streaming engine of the plurality of streaming engines and the host device includes: generating a mask based on an encryption ID associated with the streaming engine of the plurality of streaming engines, an address associated with a data word of the data stream, and a stored key associated with the streaming engine; and XORing the generated mask with the data word.

In an example, a hardware accelerator comprises a plurality of functional circuits, a plurality of streaming engines, a stream switch coupled between the plurality of functional circuits and the plurality of streaming engines, and an interface coupled to the plurality of streaming engines. The interface, in operation, couples streaming engines of the plurality of streaming engines to a host system. The hardware accelerator includes configuration registers, which, in operation, store configuration information indicating a respective security state associated with each functional circuit of the plurality of functional circuits and a respective security state associated with each streaming engine of the plurality of streaming engines. In a secure mode of operation of the hardware accelerator, functional circuits associated with a first security state based on the stored configuration information are restricted to performing functional operations associated with the first security state; streaming engines associated with the first security state based on the stored configuration information are restricted to performing streaming operations associated with the first security state; functional circuits associated with a second security state based on the stored configuration information are restricted to performing functional operations associated with the second security state; and streaming engines associated with the second security state based on the stored configuration information are restricted to performing streaming operations associated with the second security state.

In an example, a system includes a host device and a hardware accelerator coupled to the host device. The hardware accelerator comprises a plurality of functional circuits, a plurality of streaming engines, a stream switch coupled between the plurality of functional circuits and the plurality of streaming engines, an interface coupled between the host device and the plurality of streaming engines, and security state configuration registers. The security state configuration registers, in operation, store security state configuration information indicating a respective security state associated with each functional circuit of the plurality of functional circuits and a respective security state associated with each streaming engine of the plurality of streaming engines. In a secure mode of operation, access to functional circuits of the plurality of functional circuits and access to streaming engines of the plurality of streaming engines is restricted based on the stored security state configuration information.

In an example, a method comprises determining whether an operation to be performed by a hardware accelerator is associated with a secure network or a non-secure network, and performing the operation based on the determination and stored security state configuration information indicating respective security states of intellectual properties (IPs) of the hardware accelerator. The stored security state configuration information indicates whether an IP of the hardware accelerator is secure or not secure. The performing the operation includes, in response to a determination that the operation to be performed by the hardware accelerator is associated with a secure network, performing the operation using IPs of the hardware accelerator which the stored security state configuration information indicates are secure, and in response to a determination that the operation to be performed by the hardware accelerator is associated with a non-secure network, performing the operation using IPs of the hardware accelerator which the stored security state configuration information indicates are not secure.

In an example, a non-transitory computer-readable medium's contents configure a hardware accelerator to perform a method. The method comprises determining whether an operation to be performed by the hardware accelerator is associated with a secure network or a non-secure network, and performing the operation based on the determination and stored security state configuration information indicating respective security states of intellectual properties (IPs) of the hardware accelerator. The stored security state configuration information indicates whether an IP of the hardware accelerator is secure or not secure. The performing the operation includes: in response to a determination that the operation to be performed by the hardware accelerator is associated with a secure network, performing the operation using IPs of the hardware accelerator which the stored security state configuration information indicates are secure; and in response to a determination that the operation to be performed by the hardware accelerator is associated with a non-secure network, performing the operation using IPs of the hardware accelerator which the stored security state configuration information indicates are not secure.

The invention is defined by the appended independent claims.

### BRIEF DESCRIPTION OF THE SEVERAL VIEWS OF THE DRAWINGS

One or more embodiments are described hereinafter with reference to the accompanying drawings.
Figure 1 is an exemplary diagram illustrating a digit recognition task.
Figure 2 is an exemplary diagram illustrating an image recognition task.
Figure 3 is an exemplary diagram illustrating an example of a CNN.
Figure 4 is an exemplary diagram illustrating an example convolutional layer of a CNN.
Figure 5 is an exemplary diagram illustrating strides of convolutional layers of a CNN.
Figure 6 is an exemplary diagram illustrating application of padding of an input feature map to preserve height and width dimensions during a convolutional.
Figure 7 is an exemplary diagram illustrating loading of feature data in batches.
Figure 8 is an exemplary diagram illustrating processing of a convolution in batches.
Figure 9 is an exemplary block diagram of an embodiment of an electronic device or system employing cryptographic circuitry.
Figure 10 is a functional block diagram of an example of a hardware accelerator employing cryptographic circuitry.
Figure 11 is a functional block diagram of an example of an arbitration and bus system interface employing cryptographic circuitry.
Figure 12 is an exemplary diagram illustrating an example application of a stream cipher to encrypt and decrypt a data stream.
Figure 13 is an exemplary diagram illustrating an example generation of an encryption mask.
Figure 14 illustrates a logical flow diagram showing an example of a process of applying cryptographic operations to data streams in a hardware accelerator.
Figure 15 is a functional block diagram of an example of a hardware accelerator employing cryptographic and security circuitry.
Figure 16 illustrates a logical flow diagram showing an example of a process for securing resources of a hardware accelerator.

### DETAILED DESCRIPTION

The following description, along with the accompanying drawings, sets forth certain specific details in order to provide a thorough understanding of various disclosed embodiments. However, one skilled in the relevant art will recognize that the disclosed embodiments may be practiced in various combinations, with or without one or more of these specific details, or with other methods, components, devices, materials, etc. In other instances, well-known structures or components that are associated with the environment of the present disclosure, including but not limited to interfaces, power supplies, physical component layout, convolutional accelerators, Multiply-ACcumulate (MAC) circuitry, etc., in a hardware accelerator environment, have not been shown or described in order to avoid unnecessarily obscuring descriptions of the embodiments. Additionally, the various embodiments may be methods, systems, devices, computer program products, etc.

Throughout the specification, claims, and drawings, the following terms take the meaning associated herein, unless the context indicates otherwise. The term "herein" refers to the specification, claims, and drawings associated with the current application. The phrases "in one embodiment," "in another embodiment," "in various embodiments," "in some embodiments," "in other embodiments," and other variations thereof refer to one or more features, structures, functions, limitations, or characteristics of the present disclosure, and are not limited to the same or different embodiments unless the context indicates otherwise. As used herein, the term "or" is an inclusive "or" operator, and is equivalent to the phrases "A or B, or both" or "A or B or C, or any combination thereof," and lists with additional elements are similarly treated. The term "based on" is not exclusive and allows for being based on additional features, functions, aspects, or limitations not described, unless the context indicates otherwise. In addition, throughout the specification, the meaning of "a," "an," and "the" include singular and plural references.

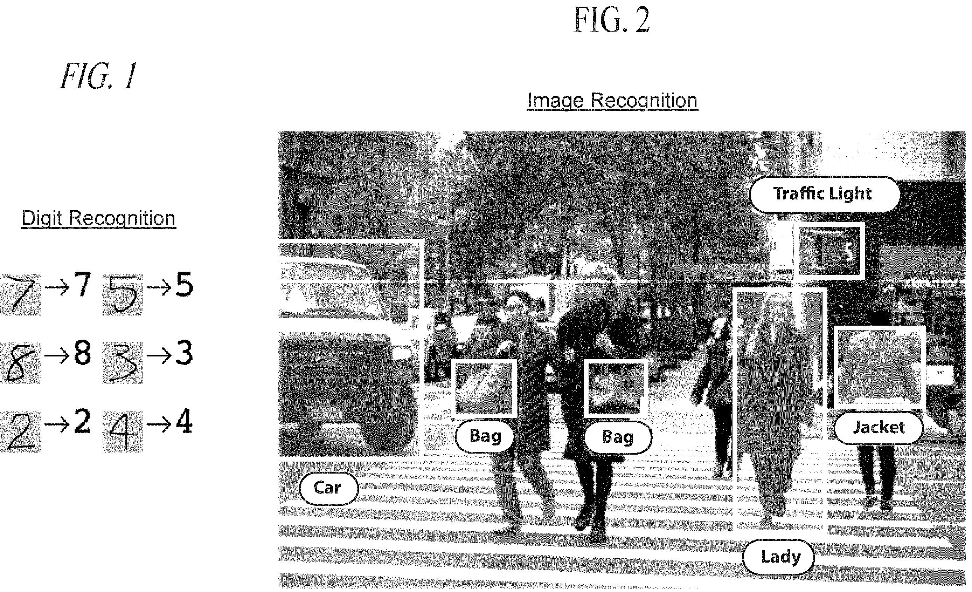

CNNs are particularly suitable for recognition tasks, such as recognition of numbers or objects in images, and may provide highly accurate results. Figure 1 is a conceptual diagram illustrating a digit recognition task and Figure 2 is a conceptual diagram illustrating an image recognition task.

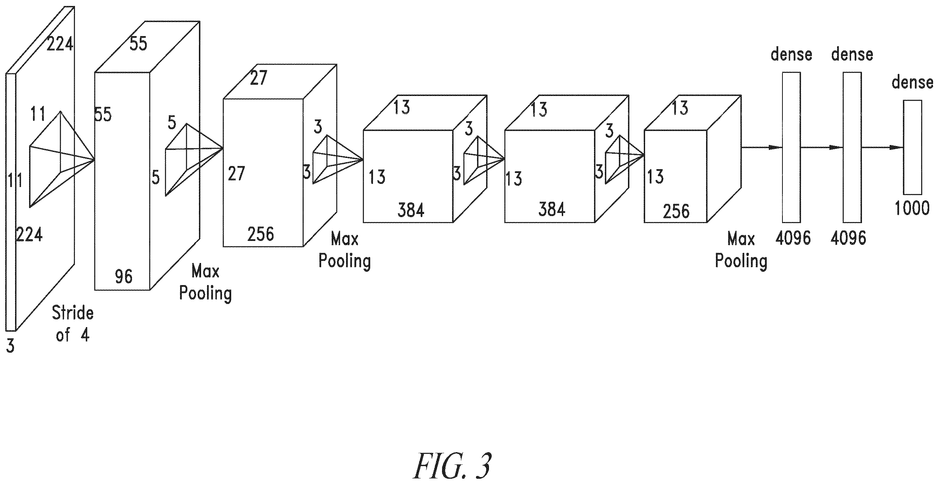

CNNs are specific types of deep neural networks (DNN) with one or multiple layers which perform a convolution on a multi-dimensional feature data tensor (e.g., a three-dimensional data tensor having width x height x depth). The first layer is an input layer and the last layer is an output layer. The intermediate layers may be referred to as hidden layers. The most used layers are convolutional layers, fully connected or dense layers, and pooling layers (max pooling, average pooling, etc.). Data exchanged between layers are called features or activations. Each layer also has a set of learnable parameters typically referred to as weights or kernels. Figure 3 is a conceptual diagram illustrating an example of an CNN, that is AlexNet. The illustrated CNN has a set of convolutional layers interleaved with max pooling layers, followed by a set of fully connected or dense layers.

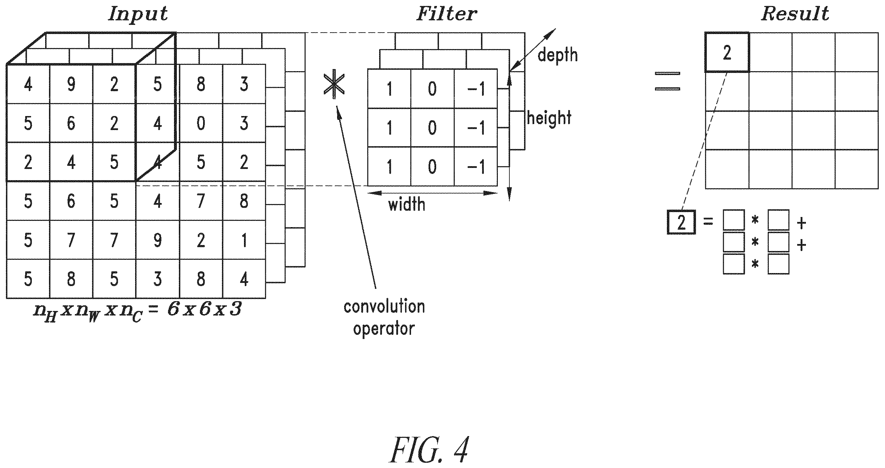

The parameters of a convolutional layer include a set of learnable filters referred to as kernels. Each kernel has three dimensions, height, width and depth. The height and width are typically limited in range (e.g., [1, 11]). The depth typically extends to the full depth of an input feature data. Each kernel slides across the width and the height of the input features and a dot product is computed. At the end of the process a result is obtained as a set of two-dimensional feature maps. In a convolutional layer, many kernels are applied to an input feature map, each of which produces a different feature map as a result. The depth of the output feature tensors is also referred to the number of output channels. Figure 4 is a conceptual diagram illustrating the application of a kernel to a feature map, producing a two-dimensional feature map having a height of 4 and a width of 4.

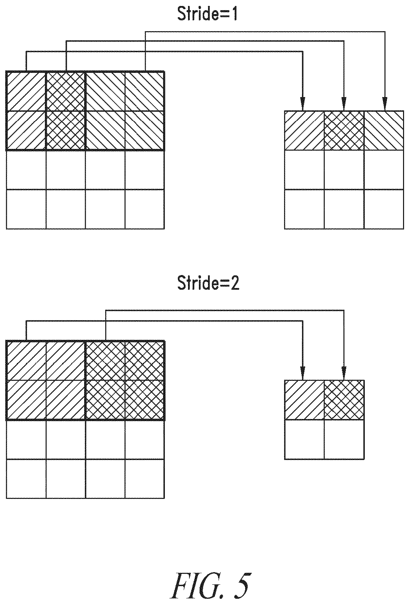

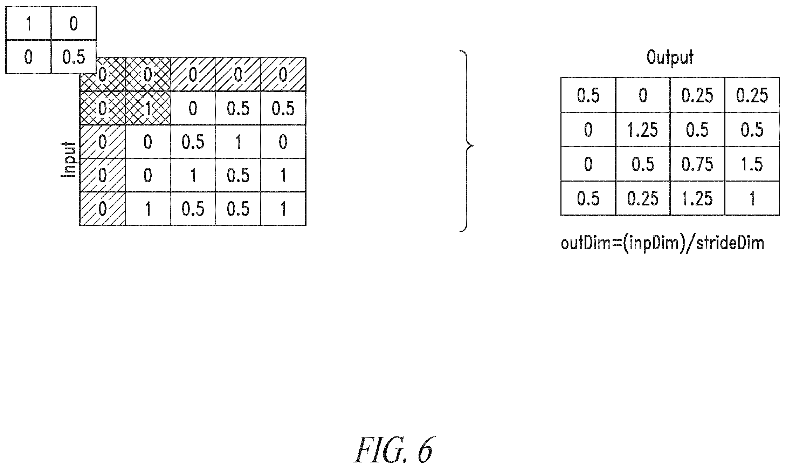

Convolutional layers also may have other parameters, which may be defined for the convolutional layer, rather than learned parameters. Such parameters may be referred to as hyper-parameters. For example, a convolutional layer may have hyper-parameters including stride and padding hyper-parameters. The stride hyper-parameter indicates a step-size used to slide kernels across an input feature map. Figure 5 is a conceptual diagram comparing a stride of 1 and a stride of 2. The padding hyper-parameter indicate a number of zeros to be added along the height, the width or the height and width of the input feature map. The padding parameters may be used to control a size of an output feature map generated by the convolution. Figure 6 is a conceptual diagram illustrating application of padding to an input feature map.

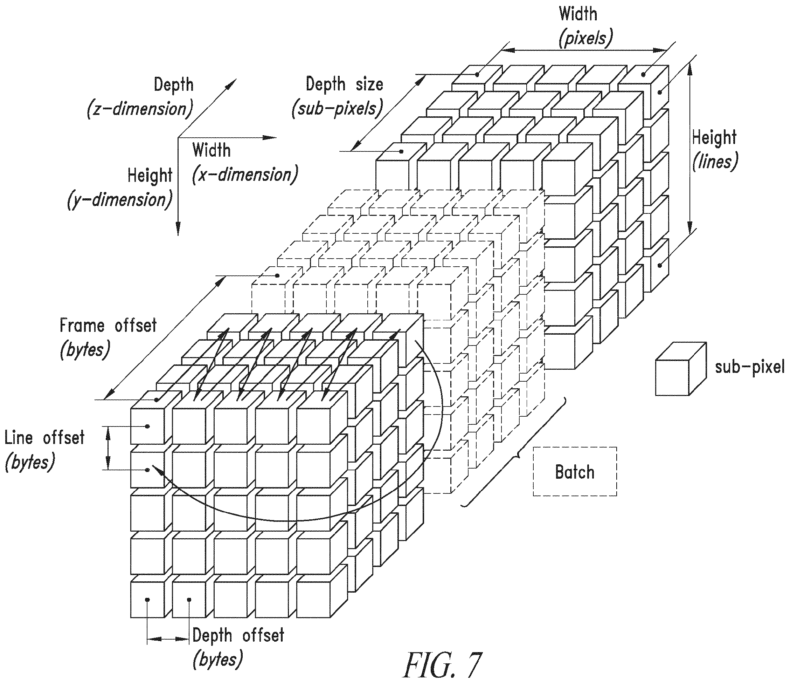

The feature data of a convolutional layer may have hundreds or even thousands of channels, with the number of channels corresponding to the depth of the feature data and of the kernel data. For this reason, feature and kernel data are often loaded into memory in batches. Figure 7 is a conceptual diagram illustrating the concept of loading feature data in batches. The feature data is split along the depth dimension into batches, with each batch of feature data having the same height, width and depth. The kernel depth is generally the same as the depth of the input feature map, so similar issues are addressed by batching.

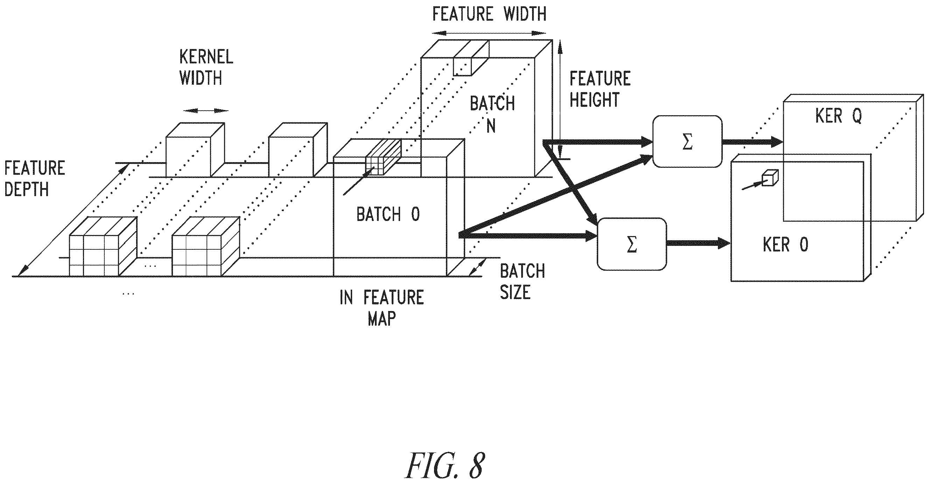

As illustrated, the batches have a height of 5, a width of 5, and a depth of 4. Batches are typically written into memory sequentially, with writing of a first batch being completed before beginning the writing of a second batch. The arrows in Figure 7 illustrate an example order in which data of a batch is written into memory. A similar batching process is typically applied to the kernel data, with each batch of the kernel data having a same kernel height and kernel width, and the same depth as the batches of feature data. Each batch of feature data is convolved with a related batch of kernel data, and a feedback mechanism is employed to accumulate the results of the batches. The conceptual diagram of Figure 8 illustrates the concept of batch processing of a convolution.

As can be seen, the computations performed by a CNN, or by other neural networks, often include repetitive computations over large amounts of data. For this reason, computing systems having hardware accelerators may be employed to increase the efficiency of performing operations associated with the CNN.

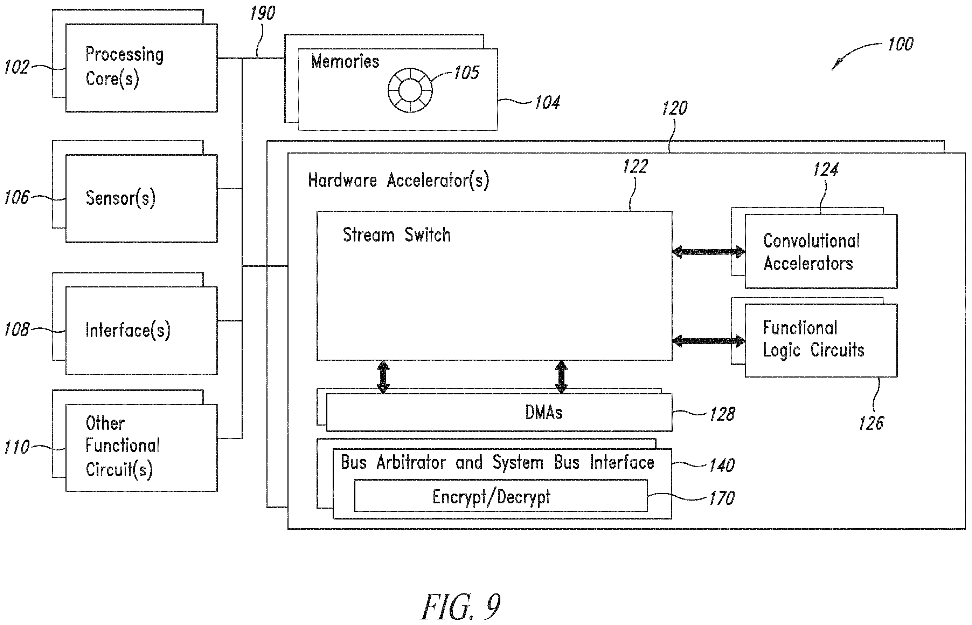

Figure 9 is a functional block diagram of an embodiment of an electronic device or system 100 of the type to which described embodiments may apply. The system 100 comprises one or more processing cores or circuits 102. The processing cores 102 may comprise, for example, one or more processors, a state machine, a microprocessor, a programmable logic circuit, discrete circuitry, logic gates, registers, etc., and various combinations thereof. The processing cores may control overall operation of the system 100, execution of application programs by the system 100 (e.g., programs which classify images using CNNs), etc.

The system 100 includes one or more memories 104, such as one or more volatile and/or non-volatile memories which may store, for example, all or part of instructions and data related to control of the system 100, applications and operations performed by the system 100, etc. One or more of the memories 104 may include a memory array, general purpose registers, etc., which, in operation, may be shared by one or more processes executed by the system 100. As illustrated, the memory includes one or more circular buffers 105, which may be implemented using cells of a memory array, a set of general purpose registers, etc.

The system 100 may include one or more sensors 106 (*e.g.,* image sensors, audio sensors, accelerometers, pressure sensors, temperature sensors, etc.), one or more interfaces 108 (*e.g.*, wireless communication interfaces, wired communication interfaces, etc.), and other circuits 110, which may include antennas, power supplies, one or more built-in self-test (BIST) circuits, etc., and a main bus system 190. The main bus system 190 may include one or more data, address, power, interrupt, and/or control buses coupled to the various components of the system 100. Proprietary bus systems and interfaces may be employed, such as Advanced eXtensible Interface (AXI) bus systems and interfaces.

The system 100 also includes one or more hardware accelerators 120 which, in operation, accelerate the performance of one or more operations associated with implementing a CNN. The hardware accelerator 120 as illustrated includes one or more convolutional accelerators 124 and one or more functional logic circuits 126 to facilitate efficient performance of convolutions and other operations associated with layers of a CNN. The hardware accelerator 120 as illustrated also includes a stream switch 122, and one or more streaming engines or DMA controllers 128. The stream switch 122, in operation, facilitates streaming of data between the convolutional accelerators 124, the functional logic circuits 126 and the streaming engines or DMAs 128. The bus arbitrator and system bus interface 140 facilitates transfers of data, such as streaming of data, between the hardware accelerator 120 and other components of the system 100, such as the processing cores 102, the memories 104, the sensors 106, the interfaces 108, and the other functional circuits 110.

As noted above, the data streamed may include input data and trained weights, both of which may be considered to be confidential information, raising security issues. Block cyphering algorithms are too inefficient to be employed with non-continuous access patterns to data, which may typically arise during the implementation of a reconfigurable CNN. Stream ciphers may be employed to increase the efficiency. However, conventional block cipher and stream cipher implementations are not sufficiently secure. For example, typically only input weights are subject to encryption and decryption, leaving intermediate (working) data and activation data unprotected. Unencrypted working data (e.g., sub-tensor data) and activation data streamed between the convolutional accelerator 220 and host or external IPs (e.g., to memory 104 for temporary storage) can be used to determine the trained weights. Stream ciphers also raise synchronization and bandwidth issues.

To facilitate addressing these security concerns, the bus arbitrator and system bus interface 140 includes a cryptographic circuit 170, which, in operation, performs stream cipher encryption and decryption operations in a manner which facilitates providing improved security and synchronization performance, as well as increased throughput and flexibility, as compared to conventional block cipher and stream cipher solutions. The cryptographic circuitry 170 facilitates practical encrypting of all data streamed to and from the hardware accelerator 120, if desired, as discussed in more detail below.

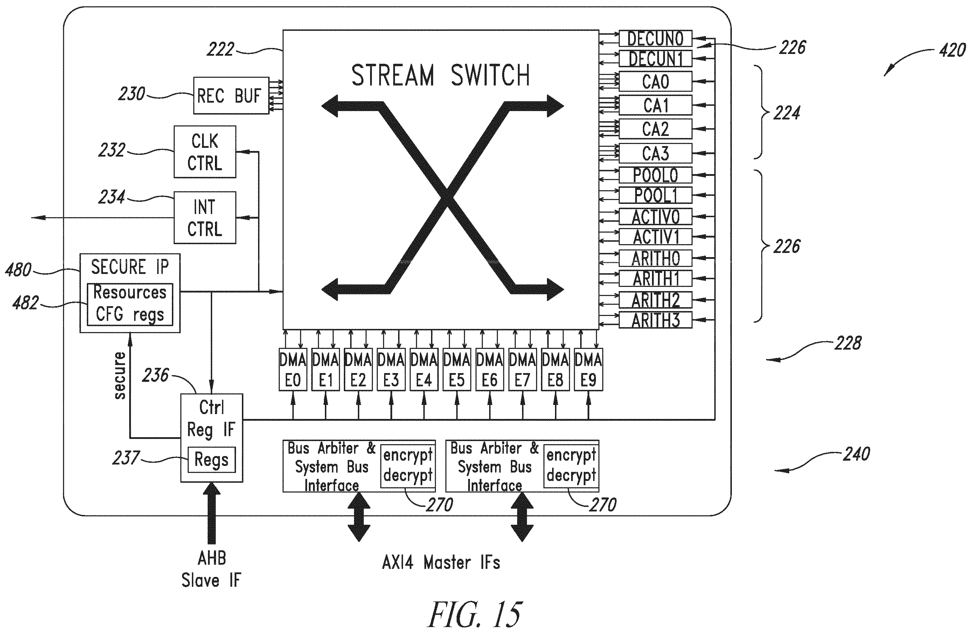

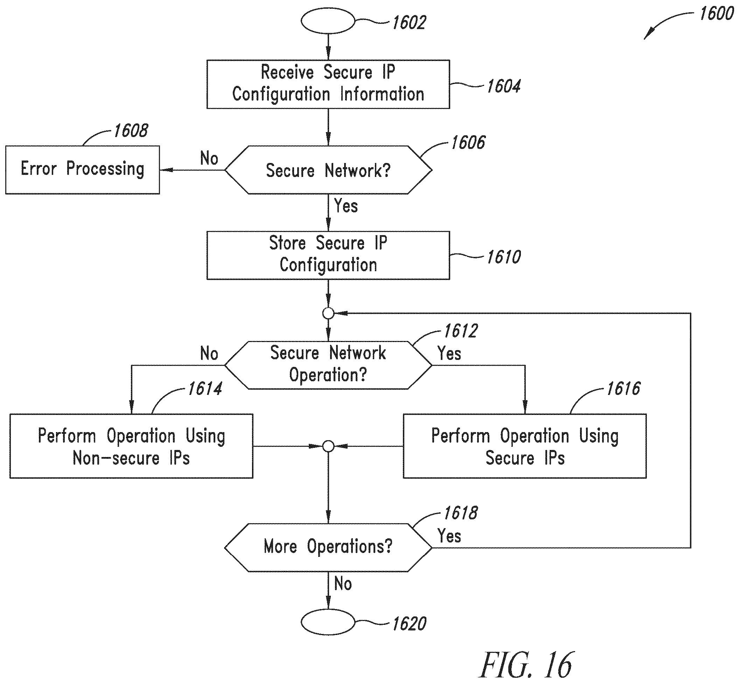

Embodiments of the system 100 of Figure 9 may include more components than illustrated, may include fewer components than illustrated, may combine components, may separate components into sub-components, and various combination thereof. For example, the hardware accelerator 120 may include control registers to control the stream switch 122, line buffers and kernel buffers to buffer feature line data and kernel data provided to the convolutional accelerators 124, etc., and various combinations thereof. In another example, the topology of the neural network may be considered confidential information. Embodiments of the hardware accelerator 120 may include a secure intellectual property (IP) circuit to facilitate concurrent servicing of secure and non-secure networks in a secure manner, as discussed in more detail below with reference to Figure 15 and 16.

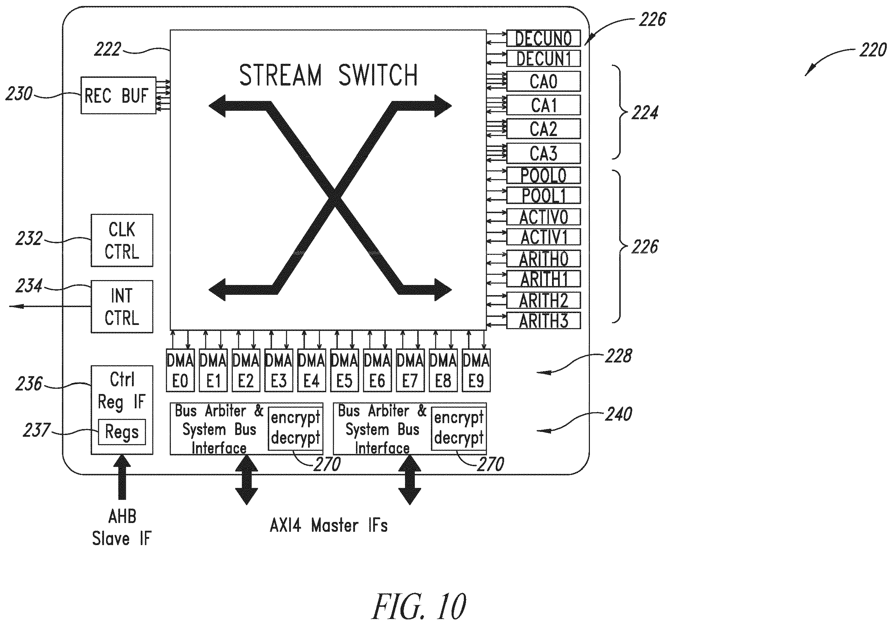

Figure 10 is a functional block diagram of an embodiment of a hardware accelerator 220 in more detail, that may be employed, for example, as a hardware accelerator 120 in the embodiment of the system 100 of Figure 1. The hardware accelerator 220 as illustrated includes convolutional accelerators 224, other functional logic circuits 226 (e.g., activation circuits, decompression units, pooling circuits, etc.), a stream switch 222, streaming engines or DMA controllers 228, and bus arbitrator and system bus interfaces 240. The bus arbitrator and system bus interfaces 240 include cryptographic circuitry 270, which, in operation, performs stream cipher encryption and decryption operations on data streamed between IPs external to the hardware accelerator (such as IPs of an on-chip host system exemplified in Figure 1 or external IPs) and the DMA controllers 228 via a bus system interface, as illustrated AXI master interfaces.

As discussed in more detail below, the cryptographic circuitry 270 generates a mask using a key and other data (e.g., an address) and applies the mask (e.g., in an XOR operation) to a data stream, encrypting or decrypting the data stream. To facilitate providing increased security, other data in addition to the key and the address may be used to generate the mask, which avoids using the same mask to encrypt and decrypt multiple data words.

To increase the bandwidth and provide flexibility in assigning resources, the cryptographic circuitry may employ multiple stream cipher engines. For example, when four stream cipher engines are available in the cryptographic circuitry, and three data streams having different bandwidth and security levels need to be processed (e.g., one hand-bandwidth secure stream A, one low-bandwidth secure stream B, and one medium-bandwidth non-secure stream C), the available stream cipher engines may be assigned taking the bandwidth and security levels into account (e.g., three cipher engines may be assigned to hand-bandwidth secure stream A and one cipher engine may be assigned to medium bandwidth stream B, with no cipher engine assigned to non-secure stream C).

To provide increased security for secure IPs, in an example the cryptographic circuitry facilitates separation of the stream cipher instances into secure and non-secure networks of a system. It is noted that a non-secure network may process secure data streams.

The hardware accelerator 220 as illustrated also includes a buffer 230, a clock controller 232, an interrupt controller 234, and a control register interface 236 having one or more configuration registers 237, which may generally operate in a conventional manner. Embodiments of the hardware accelerator 220 of Figure 10 may include more components than illustrated, may include fewer components than illustrated, may combine components, may separate components into sub-components, and various combination thereof. For example, the hardware accelerator 220 may include a secure intellectual property (IP) circuit to facilitate concurrent servicing of secure and non-secure networks in a secure manner, as discussed in more detail below with reference to Figures 15 and 16. In another example, configuration registers 237 may be separate from the control register interface 236, may be included in other components in addition to or instead of in the control register interface 236, etc., and various combinations thereof.

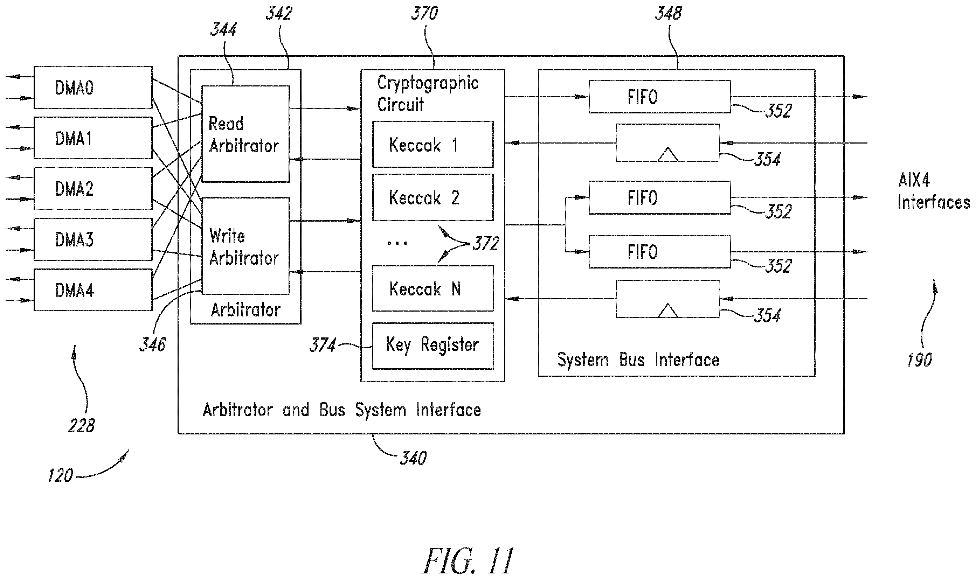

Figure 11 is a functional block diagram of an example of an arbitrator and bus system interface 340 in more detail, that may be employed, for example, as one of the arbitrator and bus system interfaces 140 in the example of the system 100 of Figure 1, as one of the arbitrator and bus system interfaces 240 of the hardware accelerator 220 of Figure 10, etc. The arbitrator and bus system interface 340 as illustrated includes an arbitrator circuit 342 having a read arbitrator 344 and a write arbitrator 346, and a system bus interface 348 having a plurality of FIFO output buffers 352 and a plurality of input buffers 354. The arbitrator and system bus interface 340 also includes cryptographic circuitry 370 coupled between the arbitrator 342 and the system bus interface 348. The cryptographic circuitry 370 as illustrated comprises one or more bidirectional (keccak) streaming cipher engines 372 (N keccak streaming engines 1 to N as shown), and a key register 374.

In operation, the arbitrator circuit 342 couples the arbitrator and bus system interface 340 to a set of streaming engines or DMA controllers 228, and the system bus interface 348 couples the arbitrator and bus system interface 340 to a system bus 190, as illustrated to a plurality of AIX4 interfaces. The cryptographic circuitry 370 is coupled between the arbitrator 342 and the system bus interface 348, and in operation, encrypts and decrypts streaming data streamed between a hardware accelerator 120 and a system bus 190 using keys stored in the key register. The keys may be, for example, 128-bit keys.

In operation, the keccak streaming engines 372 may be shared by the set of streaming engines or DMA controllers 228 to which the arbitrator 342 is coupled. Streaming requests from the streaming engines 228 may be queued and processed by the cryptographic circuitry using a pool of keccak streaming cipher engines 372. The number of keccak streaming cipher engines 372 may be a configuration parameter determined during the design of the hardware accelerator 120 to achieve a desired bandwidth (e.g., two keccak streaming cipher engines 272 may be shared by five streaming engines 228 to provide a 40 percent theoretical bandwidth capability, five keccak streaming cipher engines may be shared by five streaming engines 228 to provide a 100 percent theoretical bandwidth capability, etc.). The streaming cipher engines 372 may have no fixed streaming engine assignment, and may be scheduled dynamically according to bandwidth requirements and scheduling priorities of the streaming engines, may have fixed assignments to streaming engines or sets of streaming engines, etc., or various combinations thereof.

For example, with references to Figures 9, 10 and 11, a streaming engine 228 of a hardware accelerator 220 may generate a request to read a data stream (e.g., a tensor or subtensor) from memory 104. The arbitrator 342 will arbitrate an order in which the streaming requests are handled. When the request is processed, data will be streamed via the system bus 190 from the memory 104 to the accelerator 120.

The received data stream may be encrypted. Thus, the streaming engine 228 may use a key, an encryption ID and a memory address associated with a data word of the data stream to generate a mask. The data stream may be decrypted by one of the keccak streaming cipher engines using the generated mask. The decrypted result may be provided to the streaming engine 228. The decrypted data stream may be streamed by the stream switch from the streaming engine 228 to one of the convolutional accelerators 224 or other functional circuits 226 of the hardware accelerator 120, for processing. The available keys may be stored in the key register 374.

The results of the processing may be streamed by the streaming switch 222 to one of the streaming engines 228 (the same streaming engine 228 or another streaming engine 228), and a request to write a data stream to memory 104 may be generated by the streaming engine 228. As noted above, the arbitrator 342 will arbitrate an order in which the streaming requests are handled. When the write request is processed, data will be streamed via the system bus 190 from the accelerator 120 to the memory 104. The results as received by the streaming engine will be plain text. Thus, the streaming engine 228 may select a key from a number of keys stored in the key register 374 to generate a mask, and the result data stream may be encrypted by one of the keccak streaming cipher engines using the generated mask. The encrypted result may be provided to the bus system for streaming to the memory 104 for storage.

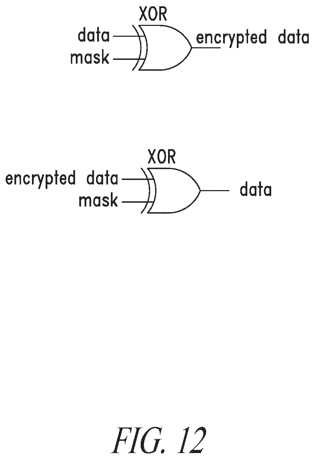

Figure 12 is a conceptual diagram illustrating an example application of a stream cipher to encrypt and decrypt a data stream. As illustrated, to encrypt the data, the data is XORed with a mask, generating encrypted data. To decrypt the data, the encrypted data is XORed with the same mask, generating decrypted data. The output of the XOR operation is a one when the inputs are different, and a zero when the inputs are the same.

While the same mask used to encrypt a data stream must be used to decrypt the data stream, if the same mask is used for all the encryption and decryption operations performed on all the data streams, it becomes easier for the secret data (e.g., the weights) to be discovered in an attack. Thus, an embodiment facilitates changing the mask used to encrypt different data streams, while keeping track of which mask is to be used to facilitate decrypting of the data streams.

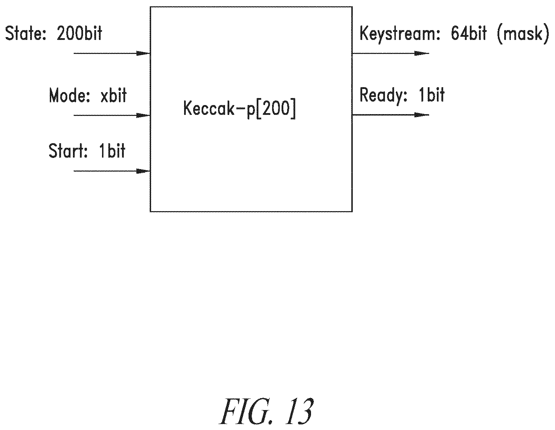

Figure 13 is a conceptual diagram illustrating an example generation of a mask by a stream cipher engine to be used to encrypt and decrypt a data stream, which facilitates generating unique masks to apply to each data value to be sent or received in a secure manner, as well as changing masks during iterative rounds of processing in which memory locations are reused (e.g., iterative processing of a subset of a tensor which involves reuse of addresses in a circular buffer). As illustrated, a keccak-p[200] hashing function is used to generate a 64-bit mask based on a 200-bit state input. A mask may be generated for each 64-bit word based on the address, which facilitates read and write accesses at different granularities. Access requests at various granularities may typically occur during rounds of a CNN. Other hashing functions may be employed, other masking granularities may be employed, and other word sizes may be employed.

A mode input is used to control the number of hashing cycles used to generate the mask from the 200-bit state input. For example, in an embodiment if the mode input is set to three, three cycles or nine rounds may be employed to generate the mask; if the mode input is set to four, four cycles or twelve rounds may be employed to generate the mask. The number of cycles may be selected to balance latency and security. Also, the number of rounds per cycle may vary in different examples. A start bit controls the start of the hashing function and a ready bit indicates when the mask is ready for use to encrypt or decrypt streaming data.

The 200-bit state input may comprise a key, an encryption ID, and a memory address. The key may be, for example, a 128-bit key selected by the streaming engine 228 from among keys stored in the key register 374. The encryption ID may be a 43-bit ID, which may be stored in one or more registers and may be specific to each streaming engine 228. The memory address is an address to which the streaming engine is writing or reading data. Thus, the mask is address dependent. If different data is written to the same memory location by the same streaming engine using the same key, it is possible to have the exact same state input being used to generate the mask, which raises security vulnerabilities.

In an example, this is addressed by selectively updating the encryption IDs associated with the respective streaming engines for use in generating masks associated with encrypting or decrypting various data streams. Other data streams may use fixed encryption IDs. For example, an initial encryption ID may be assigned to each streaming engine, either periodically or at the start of each epoch of a CNN.

The initial encryption ID may be programmable. The encryption ID may be automatically updated, for example, incremented or decremented, either periodically or in response to an event. For example, the encryption ID associated with a streaming engine 228 may be incremented in response to a request to write to a memory location which has already been written to by the streaming engine in a current epoch. For example, an epoch may include iterative rounds in which repetitive calculations are performed on a sub-tensor and the same memory locations are used to store intermediate results of the rounds. For each of iteration of a round, the encryption ID may be updated (e.g., incremented or decremented) to avoid identical masks being generated for use with the same address locations during repeated iterations of the round.

For some streaming requests, the encryption ID may be fixed. For example, read-only weights may have a fixed encryption ID assigned to the weights to facilitate the decryption process. For other streaming requests, such as write requests associated with storing intermediate results in a circular buffer (see circular buffer 105 of Figure 9), the encryption ID may be updated for each restarted access to an address in the circular buffer. The encryption IDs used to encrypt data stored at a memory location may be tracked so that data fetched from the circular buffer may be decrypted on the fly, even if the read request is associated with a different streaming engine.

Embodiments of the arbitrator and bus system interface 340 of Figure 11 may include more components than illustrated, may include fewer components than illustrated, may combine components, may separate components into sub-components, and various combination thereof. For example, the key register 374 may be separate from the cryptographic circuit 370 in some embodiments.

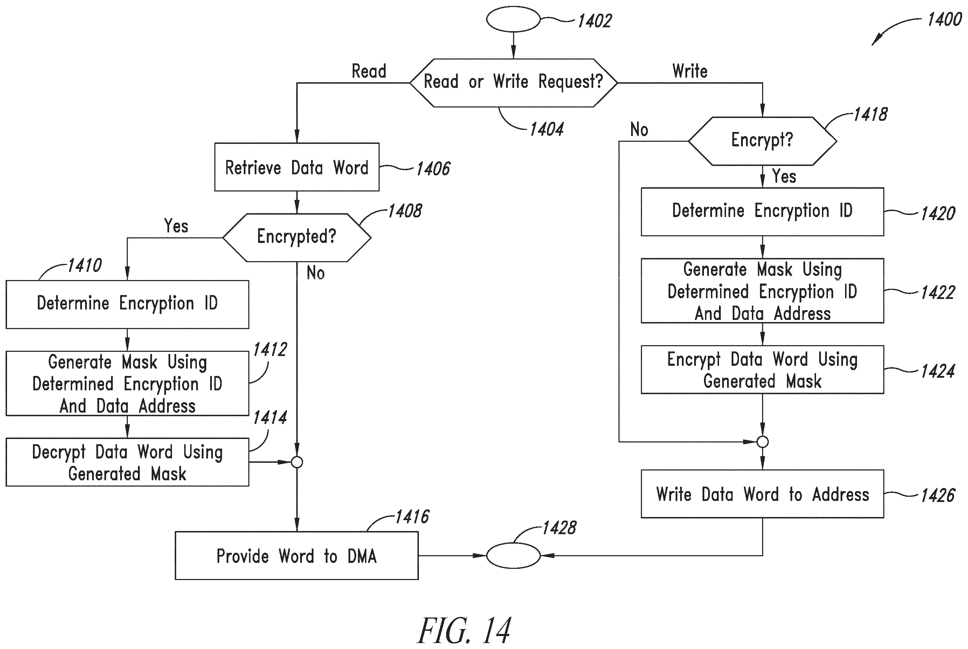

Figure 14 illustrates an example of a method 1400 of a process of applying cryptographic operations to words of data streams in a hardware accelerator, that may be employed by various devices and systems, such as, for example, the hardware accelerator 120 of the system of Figure 9, the hardware accelerator 220 of Figure 10, the arbitrator and bus system interface 340 of Figure 11, etc. For convenience, Figure 14 will be described with reference to Figures 9-13.

The method 1400 starts at 1402, for example, in response to a request from a process executing on the hardware accelerator 120 to stream data to or from the hardware accelerator 120. The request may be generated by streaming engine 228 of the hardware accelerator 120. The method 1400 proceeds from 1402 to 1404.

At 1404, the method 1400 determines whether the request is a read request, such as a request to read a word of a data stream stored at an address in a circular buffer 105 of the memory 104, or a write request, such as a request to store a word of a data stream into an address of the circular buffer 105 of the memory 104. When it is determined at 1404 that the request is a read request, the method 1400 proceeds from 1404 to 1406.

At 1406, a word associated with the request is retrieved from an address specified in the request. For example, a word may be retrieved from an address of the circular buffer via the system bus interface 348. The method 1400 proceeds from 1406 to 1408.

At 1408, the method 1400 determines whether the retrieved data word is encrypted. This may be done, for example, by retrieving configuration information associated with the requesting streaming engine, based on control information associated with the request or a type of request or a data tensor associated with the request, or a processing round associated with the request, etc. For example, if the request is a request to retrieve stored weights or to retrieve stored intermediate values, it may be determined that the data word is encrypted. If the request is a request to retrieve unencrypted data (e.g., unencrypted sensor data), it may be determined that the data is unencrypted. A control flag may be set, for example by the streaming engine 228, or retrieved from a control register to indicate whether the request is a request to retrieve encrypted data. In another example, at the start of a processing round, control registers of a streaming engine 228 may be programmed with control information indicating an encryption ID associated with the processing round, and whether encryption is employed in the processing round.

When it is determined at 1408 that the retrieved data word is encrypted, the method 1400 proceeds from 1408 to 1410. When it is not determined at 1408 that the retrieved data word is encrypted, the method 1400 proceeds from 1408 to 1416.

At 1410, the method 1400 determines an encryption ID associated with the encrypted data word. This may be done, for example, based on control information associated with the request or a type of request or the data word.

For example, if the request is a request to retrieve read-only stored data, such as stored weights, a encryption ID associated with the particular set of stored weights may be determined to be associated with the encrypted word.

In another example, the encryption ID may be the encryption ID associated with the streaming engine 228 which generated the read request. When data associated with the request is returned, an associated transaction ID from the bus system 190 may be used to identify the streaming engine that initiated the request, and the encryption ID of the requesting streaming engine retrieved. If the request is associated with a request to retrieve encrypted intermediate values during a processing round, the encryption ID may be determined based on a streaming engine 228 initiating the request to retrieve. The registers storing the current encryption ID of the streaming engine 228 associated with the request to retrieve may be accessed to determine the encryption ID, which may be an encryption ID assigned to the streaming engine 228 for the current round (e.g., an incremented encryption ID). Once the information to generate the mask is retrieved, any stream cipher engine 372 may be employed to generate the mask. The decrypted results may be processed by any of the streaming engines 228.

The method 1400 proceeds from 1410 to 1412. At 1412, the method 1400 generates a mask using the determined encryption ID and data address. This may be done, for example, using a keccak hashing algorithm, such as conceptually illustrated in Figure 13, implemented using a stream cipher engine 372 of Figure 11. The data address may be, for example, an address of a circular buffer, such as circular buffer 105 of Figure 9, or an address storing kernel weights.

The method 1400 proceeds from 1412 to 1414. At 1414, the method 1400 applies a stream cipher to the encrypted data word using the mask generated at 1412, generating an unencrypted data word. This may be done, for example, by XORing the encrypted data word with mask generated at 1412, such as conceptually illustrated in Figure 12, using a stream cipher engine 372 of Figure 11. The method 1400 proceeds from 1414 to 1416.

At 1416, the method 1400 provides the retrieved word to the requesting streaming engine 228. The provided word may be a word determined to be unencrypted at 1408, or a word decrypted at 1414. The method proceeds from 1416 to 1428.

When it is determined at 1404 that the request is a request to write a word, the method 1400 proceeds from 1404 to 1418. At 1418, the method 1400 determines whether to encrypt the word to be written. This may be done, for example, based on control information stored in configuration registers of the streaming engine 228 associated with the request, control information associated with the request or a type of request or a data tensor associated with the request, etc. For example, if the request is a request to output or store an unencrypted word, such as an unencrypted word associated with a result of a classification, it may be determined not to encrypt the word. In another example, if the request is a request to store a word of a set of intermediate values, or a word of a result to be kept confidential, it may be determined that the data word is to be encrypted before storage of the word. A control flag may be set, for example by the streaming engine 228, or retrieved from a control register to indicate whether a word, or a data tensor including a word, is to be encrypted. In some examples, a configuration register may indicate whether requests associated with a particular streaming engine 228 are to be processed using encryption.

In some examples, a user may decide whether certain data streams are to be encrypted or decrypted, and this information may be stored in configuration registers associated with the streaming engines processing the respective data streams. Some data streams may be processed in a secure manner using encryption and decryption (e.g., weights), and some data streams may be left unsecure (e.g., for performance reasons).

When it is determined at 1418 that the data word is to be encrypted, the method 1400 proceeds from 1418 to 1420. When it is not determined at 1418 that the data word is to be encrypted, the method 1400 proceeds from 1418 to 1426.

At 1420, the method 1400 determines an encryption ID associated with the data word to be encrypted. This may be done, for example, based on an encryption ID associated with the streaming engine 228 generating the request. For example, a stored encryption ID associated with the streaming engine may be retrieved from one or more registers and determined to be the encryption ID associated with the word to be written. In another example, a stored encryption ID may be retrieved and selectively incremented based on the address to which the word is to be written. For example, at the start of each successive round of an iterative process, the stored encryption ID may be incremented and the incremented encryption ID determined to be the encryption ID associated with the data words to be encrypted during the processing round. A configuration flag associated with a streaming engine 228 may be set to indicate whether incrementing of the encryption ID is enabled.

The method 1400 proceeds from 1420 to 1422. At 1422, the method 1400 generates a mask using the determined encryption ID and data address to which the data word is to be written. The data address may be, for example, an address of a circular buffer 105 storing intermediate data, an address storing a confidential classification result, etc. The generating of the mask may be done, for example, using a keccak hashing algorithm, such as conceptually illustrated in Figure 13, and implemented using a stream cipher engine, such as a stream cipher engine 372 of Figure 11.

The method 1400 proceeds from 1422 to 1424. At 1424, the method 1400 applies a stream cipher to the data word using the mask generated at 1422, generating an encrypted data word. This may be done, for example, by XORing the data word with the generated mask, such as conceptually illustrated in Figure 12, and implemented using a stream cipher engine, such as a stream cipher engine 372 of Figure 11. The method 1400 proceeds from 1424 to 1426.

At 1426, the method 1400 outputs the word, for example, for storage in the memory at the address associated with the request. The output word may be a word determined at 1418 to be output without applying encryption, or a word encrypted at 1424. The method proceeds from 1426 to 1428.

At 1428, the method 1400 may return to 1404 to process another read or write request, may perform other processes, or may terminate. For example, in response to the providing of a word to a streaming engine or DMA 228 at 1416, the streaming engine 228 may provide the word to a convolutional accelerator 224 or other functional circuit 226 via the stream switch 222.

Examples of the foregoing processes and methods may contain additional acts not shown in Figure 14, may not contain all of the acts shown in Figure 14, may perform acts shown in Figure 14 in various orders, may combine acts, may split acts into separate acts, and may be otherwise modified in various respects. For example, in an embodiment Figure 14 may be modified to include a separate act to determine whether to increment a stored encryption ID associated with a streaming engine, to combine acts 1410 and 1412, and acts 1422 and 1424, to perform act 1406 after act 1408, etc., and various combinations thereof. In another example, acts 1412 and 1422 may include selecting a stream cipher engine 372 from a bank of stream cipher engines, and the selected stream cipher engine being used to perform acts 1412 and 1414, or acts 1422 and 1424, respectively.

While the method 1400 of Figure 14 is described with respect to data words, it is to be understood that a request from a streaming engine may be a request to stream a data tensor or sub-tensor. The request may be processed on a word level by an arbitrator and bus system interface, such as the arbitrator and bus system interface 340 of Figure 11, and processed at a tensor level by a streaming engine 228.

As mentioned above, the topology of a neural network executed using the hardware accelerator may be considered confidential information. Figure 15 is a functional block diagram of an example of a hardware accelerator 420 including a secure IP circuit 480. The hardware accelerator 420 may be employed, for example, as a hardware accelerator 120 in the embodiment of the system 100 of Figure 1. The hardware accelerator 420 as illustrated is similar to the embodiment of a hardware accelerator 220 of Figure 10, and uses the same reference numbers for similar components as described above. The hardware accelerator 420 as illustrated includes a secure IP circuit 480, which, in operation, facilitates the execution of multiple networks using the hardware accelerator in a secure manner. The multiple networks may include both secure and insecure networks.

The secure IP circuit includes resource configuration registers 482, which, in operation, store configuration information indicating whether individual IPs of the hardware accelerator, e.g., the individual convolutional accelerators 224, the individual functional circuits 226, the individual streaming engines 228, individual registers of the configuration registers 237, etc., are to be considered secure or not secure IPs. For example, flags, bitmaps, masks, etc., may be employed to indicate whether individual IPs are considered to be secure or non-secure. For example, the existence of secure IPs may be masked to non-secure networks, which simply will not know that the secure IPs exist. Similarly, the existence of non-secure IPs may be masked to secure networks.

The stored configuration information may be used by components of the hardware accelerator 420, such as the stream switch 222, the clock controller 232, the interrupt controller 234, the control register interface 236, to control which IPs of the hardware accelerator 420 may be employed to implement a particular network, such as a secure network or an unsecure network. For example, the stored configuration information may be used to separate IPs and isolate control information associated with a secure network from IPs used to implement unsecure networks using the hardware accelerator 420 in parallel. This facilitates protecting the topology of the secure network.

For example, the stored configuration information may indicate:
streaming engines 228 E0-E3 are secure IPs, and streaming engines 228 E4-E9 are non-secure IPs;
convolutional accelerators 224 CA0 and CA3 are secure IPs, and convolutional accelerators 224 CA1 and CA2 are non-secure IPs;
other functional circuits 226 DECLTN0, POOL0, ACTIV0, ARITH0, and ARITH1 are secure IPs, and other functional circuits 226 DECUN1, POOL1, ACTIV1, ARITH2, and ARITH3 are not secure IPs. Other combinations of secure and non-secure IPs may be indicated by the stored configuration information.

The stream switch 222, in a secure mode of operation, may transfer data between a secure IP and one or more other secure IPs by a secure process, and may transfer data between a non-secure IP and one or more other non-secure IPs by a non-secure process, and block transfers between a secure IP and a non-secure IP. For example, secure streaming engine 228 E0 may transfer data via the stream switch 222 to secure convolutional accelerators 224 CA0 and CA3, and may not transfer data via the stream switch 222 between secure streaming engine 228 E0 and non-secure convolutional accelerators 224 CA1 and CA2. The clock control 232, interrupt control 234 and control register interface 236 may, in operation, limit access to signals (e.g., clock signals, interrupt signals) and control information (e.g., information stored in configuration registers 237) associated with secure IPs to secure networks, and limit access to signals and control information associated with non-secure IPs to non-secure networks, based on the stored configuration information.

For example, based on the stored configuration information, the control register interface 236 may restrict programming of the configuration information in the secure IP registers 482 of the secure IP to secure networks, and may restrict programming or reading of configuration registers 237 associated with secure IPs to secure networks and secure IPs, the clock control 232 may restrict access to clock signals associated with secure networks to secure networks and secure IPs, and the interrupt control 234 may restrict access to interrupt signals associated with secure networks to secure networks and secure IPs.

In an example, secure IP 480 includes the configuration registers 482, which can only be accessed with secure transactions from the host processing core 102 using secure methods, such as an ARM Trustzone. Attempts to access the registers 482 may be checked by the control register interface 236. The configuration registers 482 store information defining which block in the system belongs to which security domain. This information is forwarded to the stream switch 222 and the control register interface 236, where accesses from the bus to any internal configuration register of the system are received. The information forwarded to the stream switch 222 may be used to determine which stream links of which unit are allowed to be connected to which other stream links. Programming of forbidden connections are ignored (or generate an error) and registers in the stream switch which do not belong to the same security are not visible for access tagged with a non-matching security domain origin. Similarly, the control register interface 236 filters accesses from the bus to IPs where the security domain of the transaction does not match the security domain of the target IP (e.g., transaction unsecure + target IP secure => block access; transaction secure + target IP unsecure => block access). Such accesses may be ignored or generate an invalid access response. The individual IPs (e.g. DMA, CA, ARITH...) do not need to know the security domains because accesses are filtered upfront by the control register interface 236 using the information provided by the secure IP 480.

Figure 16 illustrates an example of a method 1600 of a process for securing resources of a hardware accelerator, that may be employed by various devices and systems, such as, for example, the hardware accelerator 420 of Figure 15, which may be employed, for example, in the system 100 of Figure 9 as the hardware accelerator 120. For convenience, Figure 16 will be described with reference to Figures 9-13 and 15.

The method 1600 starts at 1602 and proceed to 1604. At 1604, the method 1600 receives a request to configure secure IP resources of a hardware accelerator, such as the hardware accelerator 420. The request may be generated by a process executing on a host processor, such as a host processor 102 of the system 100 of Figure 9. The method 1600 proceeds from 1604 to 1606.

At 1606, the method 1600 determines whether the request to configure secure IP resources is associated with a secure network. This may be done, for example, based on whether the request is received in a secure transaction from the host processing core 102 using secure methods, such as an ARM Trustzone. When it is not determined at 1606 that the request is associated with a secure network, the method 1600 proceeds from 1606 to 1608, where error processing may be performed.

When it is determined at 1606 that the request is associated with a secure network, the method 1600 proceeds from 1606 to 1610. At 1610, the method 1600 stores configuration information associated with the secure IP configuration. This may be done by, for example, programing resource configuration registers 482 of secure IP 480 to indicate which IP resources of the hardware accelerator 420 are secure IPs and which IP resources of the hardware accelerator 420 are non-secure IPs. The configuration information may include masks and other control information which may be employed to perform operations associated with secure and non-secure networks.

The method 1600 proceeds from 1610 to 1612. At 1612, the method 1600 determines whether a network operation (e.g., an operation of a neural network) to be performed by the hardware accelerator 420 is associated with a secure network or a non-secure network. This may be done, for example, based on whether a process associated with the network operation is a secure process, whether the request is directed to a secure IP, etc.

When it is determined at 1612 that the network operation to be performed is associated with a non-secure network, the method 1600 proceeds from 1612 to 1614. At 1614, the network operation is performed using non-secure IPs, and access to secure IPs and secure IP control information is restricted. The method 1600 proceeds from 1614 to 1618.

When it is determined at 1612 that the network operation to be performed is associated with a secure network, the method 1600 proceeds from 1612 to 1616. At 1616, the network operation is performed using secure IPs, and access to non-secure IPs and non-secure IP control information is restricted. The method 1600 proceeds from 1616 to 1618.

At 1618, the method 1600 determines whether there are more network operations to process. When it is determined at 1618 that there are more network operations to process, the method 1600 returns from 1618 to 1612, to process a next network operation. When it is not determined at 1618 that there are more network operations to process, the method 1600 proceeds from 1618 to 1620.

At 1620, the method 1600 may return to 1604 to process configuration information for a next secure IP configuration, may perform other operations, may wait for additional network operations, may terminate, etc.

Examples of the foregoing processes and methods may contain additional acts not shown in Figure 16, may not contain all of the acts shown in Figure 16, may perform acts shown in Figure 16 in various orders, may combine acts, may split acts into separate acts, and may be otherwise modified in various respects. For example, an embodiment of Figure 16 may be modified to include configuring secure IPs to process operations associated with a plurality of secure networks, each secure network having a different set of secure IPs for using in performing operations associated with the respective secure network.

While the method 1600 of Figure 16 is described as performing acts sequentially, it is to be understood that acts may be performed in parallel. For example, multiple network operations may be performed in parallel.

In an embodiment, a hardware accelerator comprises a plurality of functional circuits, a plurality of streaming engines, and an interface. The plurality of streaming engines is coupled to the plurality of functional circuits. In operation, the plurality of streaming engines generates data streaming requests to stream data to and from functional circuits of the plurality of functional circuits. The interface is coupled to the plurality of streaming engines. The interface, in operation, performs stream cipher operations on data words associated with the data streaming requests. The performing a stream cipher operation on a data word includes generating a mask based on an encryption ID associated with a streaming engine of the plurality of streaming engines, an address associated with the data word, and a stored key associated with the streaming engine, and XORing the generated mask with the data word.

In an embodiment, the hardware accelerator comprises a stream switch coupled between the plurality of streaming engines and the plurality of functional circuits. In an embodiment, the plurality of functional circuits includes multiple convolutional accelerators.

In an embodiment, the interface includes a pool of stream cipher engines and control circuitry, and the control circuitry, in operation, schedules performance, by stream cipher engines of the pool of stream cipher engines, of the stream cipher operations on the data words associated with the data streaming requests. In an embodiment, the pool of stream cipher engines comprises a plurality of keccak stream cipher engines.

In an embodiment, an encryption ID associated with a streaming engine of the plurality of streaming engines is set at a start of a processing epoch. In an embodiment, respective encryption IDs associated with each of the streaming engines of the plurality of streaming engines are set at the start of the processing epoch. In an embodiment, an encryption ID associated with the streaming engine of the plurality of streaming engines is incremented between iterative processing rounds of the processing epoch.

In an embodiment, the interface, in operation, couples streaming engines of the plurality of streaming engines to a host device. In an embodiment, the data word is associated with a data streaming request to stream data from the hardware accelerator to the host device and the performing the cipher operation on the data word comprises encrypting the data word. In an embodiment, the data word is associated with a data streaming request to stream data to the hardware accelerator from the host device and the performing the cipher operation on the data word comprises decrypting the data word.

In an embodiment, the hardware accelerator comprises configuration registers, which, in operation, store configuration information indicating a respective security state associated with each functional circuit of the plurality of functional circuits and a respective security state associated with each streaming engine of the plurality of streaming engines. In a secure mode of operation: functional circuits associated with a first security state are restricted to performing functional operations associated with the first security state; streaming engines associated with the first security state are restricted to performing streaming operations associated with the first security state; functional circuits associated with a second security state are restricted to performing functional operations associated with the second security state; and streaming engines associated with the second security state are restricted to performing streaming operations associated with the second security state. In an embodiment, the first security state is a secure security state; the second security state is a non-secure security state; operations associated with the first security state are operations of a secure network; and operations associated with the second security state are operations of a non-secure network.

In an embodiment, a system comprises a host device and a hardware accelerator. The hardware accelerator includes a stream switch, a plurality of functional circuits, a plurality of streaming engines, and an interface. The stream switch, in operation, selectively couples streaming engines of the plurality of streaming engines to functional circuits of the plurality of functional circuits. The interface, in operation, selectively couples streaming engines of the plurality of streaming engines to the host device. The interface, in operation, performs stream cipher operations on data words associated with data streamed between the host device and a streaming engine of the plurality of streaming engines. The performing a stream cipher operation on a data word includes: generating a mask based on an encryption ID associated with a streaming engine of the plurality of streaming engines, an address associated with the data word and a stored key associated with the streaming engine; and XORing the generated mask with the data word.

In an embodiment, the plurality of functional circuits includes one or more convolutional accelerators, one or more pooling circuits, and one or more activation circuits. In an embodiment, the interface includes a pool of stream cipher engines and control circuitry, and the control circuitry, in operation, schedules performance, by stream cipher engines of the pool of stream cipher engines, of the stream cipher operations on the data words associated with data streamed between the host device and a streaming engine of the plurality of streaming engines. In an embodiment, the pool of stream cipher engines comprises a plurality of keccak stream cipher engines. In an embodiment, in operation, respective encryption IDs associated with streaming engines of the plurality of streaming engines are initialized at a start of a processing epoch. In an embodiment, in operation, an encryption ID associated with a streaming engine of the plurality of streaming engines is incremented between rounds of iterative processing of the processing epoch.

In an embodiment, a method comprises: streaming data streams between streaming engines of a plurality of streaming engines of a hardware accelerator and functional circuits of a plurality of functional circuits of the hardware accelerator; and streaming data streams between a host device and streaming engines of the plurality of streaming engines of the hardware accelerator via an interface of the hardware accelerator. The streaming of a data stream between the host device and a streaming engine of the plurality of streaming engines includes performing stream cipher operations on data words of the data stream. The performing a stream cipher operation on a data word includes: generating a mask based on an encryption ID associated with the streaming engine of the plurality of streaming engines, an address associated with the data word, and a stored key associated with the streaming engine of the plurality of streaming engines; and XORing the generated mask with the data word.

In an embodiment, the interface includes a pool of keccak stream cipher engines, and the method includes scheduling performance, by a stream cipher engine of the pool of keccak stream cipher engines, of the stream cipher operation on the data word.

In an embodiment, the method comprises setting a respective encryption ID associated with each streaming engine of the plurality of streaming engines at a start of a processing epoch by the hardware accelerator. In an embodiment, the method comprises incrementing an encryption ID associated with a streaming engine of the plurality of streaming engines between iterative rounds of processing of the processing epoch.

In an embodiment, the method comprises streaming the data stream from the hardware accelerator to the host device, wherein the performing the stream cipher operation on the data word comprises encrypting the data word. In an embodiment, the method comprises streaming the data stream from the host device to the hardware accelerator, wherein the performing the stream cipher operation on the data word comprises decrypting the data word.

In an embodiment, a non-transitory computer-readable medium's contents configure an interface of a hardware accelerator to stream data streams between streaming engines of a plurality of streaming engines of the hardware accelerator and a host system. The streaming of a data stream between a streaming engine of the plurality of streaming engines and the host device includes: generating a mask based on an encryption ID associated with the streaming engine of the plurality of streaming engines, an address associated with a data word of the data stream, and a stored key associated with the streaming engine; and XORing the generated mask with the data word. In an embodiment, the contents comprise instructions executed by the interface of the hardware accelerator.

In an embodiment, a hardware accelerator comprises a plurality of functional circuits, a plurality of streaming engines, a stream switch coupled between the plurality of functional circuits and the plurality of streaming engines, and an interface coupled to the plurality of streaming engines. The interface, in operation, couples streaming engines of the plurality of streaming engines to a host system. The hardware accelerator includes configuration registers, which, in operation, store configuration information indicating a respective security state associated with each functional circuit of the plurality of functional circuits and a respective security state associated with each streaming engine of the plurality of streaming engines. In a secure mode of operation of the hardware accelerator, functional circuits associated with a first security state based on the stored configuration information are restricted to performing functional operations associated with the first security state; streaming engines associated with the first security state based on the stored configuration information are restricted to performing streaming operations associated with the first security state; functional circuits associated with a second security state based on the stored configuration information are restricted to performing functional operations associated with the second security state; and streaming engines associated with the second security state based on the stored configuration information are restricted to performing streaming operations associated with the second security state.

In an embodiment, the first security state is a secure security state, the second security state is a non-secure security state, operations associated with the first security state are operations of a secure network executing on the host system, and operations associated with the second security state are operations of a non-secure network executing on the host system. In an embodiment, the plurality of functional circuits includes multiple convolutional accelerators. In an embodiment, the hardware accelerator includes a clock controller, which, in operation, generates clock signals, wherein the clock controller, in a secure mode of operation, restricts access to generated clock signals based on the stored configuration information. In an example, the hardware accelerator comprises: an interrupt controller, which, in operation, generates interrupt signals, wherein the interrupt controller, in a secure mode of operation, restricts access to generated interrupt signals based on the stored configuration information. In an example, the hardware accelerator comprises: a control register interface, which, in operation, controls storage of the configuration information in the configuration registers based on a security state associated with a host process attempting to program the configuration registers. In an example, the control register interface, in a secure mode of operation, restricts access to configuration information based on the stored configuration information.

In an example, a system includes a host device and a hardware accelerator coupled to the host device. The hardware accelerator comprises a plurality of functional circuits, a plurality of streaming engines, a stream switch coupled between the plurality of functional circuits and the plurality of streaming engines, an interface coupled between the host device and the plurality of streaming engines, and security state configuration registers. The security state configuration registers, in operation, store security state configuration information indicating a respective security state associated with each functional circuit of the plurality of functional circuits and a respective security state associated with each streaming engine of the plurality of streaming engines. In a secure mode of operation, access to functional circuits of the plurality of functional circuits and access to streaming engines of the plurality of streaming engines is restricted based on the stored security state configuration information.

In an example, functional circuits associated with a first security state are restricted to performing functional operations associated with the first security state; streaming engines associated with the first security state are restricted to performing streaming operations associated with the first security state; functional circuits associated with a second security state are restricted to performing functional operations associated with the second security state; and streaming engines associated with the second security state are restricted to performing streaming operations associated with the second security state. In an example, the first security state is a secure security state; the second security state is a non-secure security state; operations associated with the first security state are operations of a secure network executing on the host device; and operations associated with the second security state are operations of a non-secure network executing on the host device. In an example, the system comprises an integrated circuit including the host device and the hardware accelerator.

In an example, a method comprises determining whether an operation to be performed by a hardware accelerator is associated with a secure network or a non-secure network, and performing the operation based on the determination and stored security state configuration information indicating respective security states of intellectual properties (IPs) of the hardware accelerator. The stored security state configuration information indicates whether an IP of the hardware accelerator is secure or not secure. The performing the operation includes, in response to a determination that the operation to be performed by the hardware accelerator is associated with a secure network, performing the operation using IPs of the hardware accelerator which the stored security state configuration information indicates are secure, and in response to a determination that the operation to be performed by the hardware accelerator is associated with a non-secure network, performing the operation using IPs of the hardware accelerator which the stored security state configuration information indicates are not secure.

In an example, the method comprises storing the security state configuration information in security state configuration registers of the hardware accelerator in response to a programming operation associated with a secure network. In an example, the method comprises: restricting access to the security state configuration registers of the hardware accelerator based on a security state of a network associated with a request to access the security state configuration registers. In an example, the method comprises: restricting access to control signals based on the stored security state configuration information. In an example, restricting access to control signals comprises: restricting access to control signals associated with secure IPs to secure IPs; and restricting access to control signals associated with not secure IPs to not secure IPs. In an example, restricting access to control signals comprises restricting access to clock signals and interrupt signals.

In an embodiment, a non-transitory computer-readable medium's contents configure a hardware accelerator to perform a method. The method comprises determining whether an operation to be performed by the hardware accelerator is associated with a secure network or a non-secure network, and performing the operation based on the determination and stored security state configuration information indicating respective security states of intellectual properties (IPs) of the hardware accelerator. The stored security state configuration information indicates whether an IP of the hardware accelerator is secure or not secure. The performing the operation includes: in response to a determination that the operation to be performed by the hardware accelerator is associated with a secure network, performing the operation using IPs of the hardware accelerator which the stored security state configuration information indicates are secure; and in response to a determination that the operation to be performed by the hardware accelerator is associated with a non-secure network, performing the operation using IPs of the hardware accelerator which the stored security state configuration information indicates are not secure. In an embodiment, the contents comprise instructions executed by the hardware accelerator.

Some embodiments may take the form of or comprise computer program products. For example, according to one embodiment there is provided a computer readable medium comprising a computer program adapted to perform one or more of the methods or functions described above. The medium may be a physical storage medium, such as for example a Read Only Memory (ROM) chip, or a disk such as a Digital Versatile Disk (DVD-ROM), Compact Disk (CD-ROM), a hard disk, a memory, a network, or a portable media article to be read by an appropriate drive or via an appropriate connection, including as encoded in one or more barcodes or other related codes stored on one or more such computer-readable mediums and being readable by an appropriate reader device.

Furthermore, in some embodiments, some or all of the methods and/or functionality may be implemented or provided in other manners, such as at least partially in firmware and/or hardware, including, but not limited to, one or more application-specific integrated circuits (ASICs), digital signal processors, discrete circuitry, logic gates, standard integrated circuits, controllers (*e.g.,* by executing appropriate instructions, and including microcontrollers and/or embedded controllers), field-programmable gate arrays (FPGAs), complex programmable logic devices (CPLDs), etc., as well as devices that employ RFID technology, and various combinations thereof.

The various embodiments described above can be combined to provide further embodiments. These and other changes can be made to the embodiments in

light of the above-detailed description. In general, in the following claims, the terms used should not be construed to limit the claims to the specific embodiments disclosed in the specification and the claims. Accordingly, the claims are not limited by the disclosure.

## Claims

1. A hardware accelerator (120; 220; 420), comprising:
a plurality of functional circuits (124, 126; 224, 226);
a plurality of streaming engines (128; 228) coupled to the plurality of functional circuits (124, 126; 224, 226), wherein the plurality of streaming engines (128; 228), in operation, generate data streaming requests to stream data to and from functional circuits of the plurality of functional circuits (124, 126; 224, 226); and
an interface (170; 270) coupled to the plurality of streaming engines (128; 228),
wherein the interface (170; 270), in operation, performs stream cipher operations on data words associated with the data streaming requests,
wherein performing a stream cipher operation on a data word includes:
generating (1412, 1422) a mask based on an encryption ID associated with a streaming engine of the plurality of streaming engines (128; 228), an address associated with the data word, and a stored key associated with the streaming engine of the plurality of streaming engines (128; 228); and
XORing the generated mask with the data word.

2. The hardware accelerator (120; 220; 420) of claim 1, wherein:
- the interface (170; 270) includes a pool of stream cipher engines (370) and control circuitry (342), and
- the control circuitry (342), in operation, schedules performance, by stream cipher engines (372) of the pool of stream cipher engines (370), of the stream cipher operations on the data words associated with the data streaming requests.

3. The hardware accelerator (120; 220; 420) of claim 1, wherein, in operation, an encryption ID associated with a streaming engine of the plurality of streaming engines (128; 228) is set at a start of a processing epoch.

4. The hardware accelerator (120; 220; 420) of claim 1, wherein the interface (170; 270), in operation, couples streaming engines of the plurality of streaming engines (128; 228) to a host device.

5. The hardware accelerator (120; 220; 420) of claim 4, wherein:
- the data word is associated with a data streaming request to stream data to the hardware accelerator (120; 220) from the host device, and
- performing the cipher operation on the data word comprises decrypting the data word.

6. The hardware accelerator (120; 220; 420) of claim 1, comprising:
configuration registers (237; 482), which, in operation, store configuration information indicating a respective security state associated with each functional circuit of the plurality of functional circuits (124, 126; 224, 226) and a respective security state associated with each streaming engine of the plurality of streaming engines (128; 228),
wherein, in a secure mode of operation:
functional circuits (126) associated with a first security state are restricted to performing functional operations associated with the first security state;
streaming engines (128) associated with the first security state are restricted to performing streaming operations associated with the first security state;
functional circuits (226) associated with a second security state are restricted to performing functional operations associated with the second security state; and
streaming engines (228) associated with the second security state are restricted to performing streaming operations associated with the second security state.

7. The hardware accelerator (120; 220; 420) of claim 6, wherein:
the first security state is a secure security state;
the second security state is a non-secure security state;
operations associated with the first security state are operations of a secure network; and
operations associated with the second security state are operations of a non-secure network.

8. A system (100), comprising:
a host device (102); and
a hardware accelerator (120; 220; 420) according to any one of claims 1 to 7,
a stream switch (122; 222) coupled between the plurality of streaming engines (128; 228) and the plurality of functional circuits (124, 126; 224, 226) of the hardware accelerator (120; 220; 420),
wherein the host device (102) and the hardware accelerator (120; 220; 420) are configured to stream data therebetween.

9. The system (100) of claim 8, wherein the plurality of functional circuits (124, 126; 224, 226) of the hardware accelerator (120, 220) includes one or more convolutional accelerators (124; 224), one or more pooling circuits (226), and one or more activation circuits (226).

10. The system (100) of claim 9, wherein the interface (170; 270) of the hardware accelerator (120, 220) includes a pool of stream cipher engines (170; 270) and control circuitry (342), and
wherein the control circuitry (342), in operation, schedules performance, by stream cipher engines of the pool of stream cipher engines, of the stream cipher operations on the data words associated with data streamed between the host device and a streaming engine of the plurality of streaming engines (128; 228).

11. The system (100) of claim 8, wherein, in operation, respective encryption IDs associated with streaming engines of the plurality of streaming engines (128; 228) are initialized at a start of a processing epoch.

12. The system (100) of claim 11, wherein, in operation, an encryption ID associated with a streaming engine of the plurality of streaming engines (128; 228) is incremented between rounds of iterative processing of the processing epoch.

13. The system (100) of claim 8, comprising an integrated circuit including the host device and the hardware accelerator (120).

14. A method, comprising:
streaming data streams between streaming engines of a plurality of streaming engines (128; 228) of a hardware accelerator (120; 220) and functional circuits (124, 126; 224, 226) of a plurality of functional circuits of the hardware accelerator (120, 220); and
streaming data streams between a host device and streaming engines of the plurality of streaming engines (128; 228) of the hardware accelerator (120; 220) via an interface (170; 270) of the hardware accelerator (120, 220), wherein the streaming of a data stream between the host device and a streaming engine of the plurality of streaming engines (128; 228) includes performing stream cipher operations on data words of the data stream, and
wherein performing a stream cipher operation on a data word includes:
generating (1412, 1422) a mask based on an encryption ID associated with the streaming engine of the plurality of streaming engines (128; 228), an address associated with the data word, and a stored key associated with the streaming engine of the plurality of streaming engines (128; 228); and
XORing the generated mask with the data word.

15. The method of claim 14, wherein the interface (170; 270) includes a pool of keccak stream cipher engines (370), and wherein the method comprises scheduling performance, by a stream cipher engine (372) of the pool of keccak stream cipher engines (370), of the stream cipher operation on the data word.

16. The method of claim 14, comprising setting a respective encryption ID associated with each streaming engine of the plurality of streaming engines (128; 228) at a start of a processing epoch by the hardware accelerator (120, 220).

17. The method of claim 15, comprising streaming the data stream from the hardware accelerator (120; 220) to the host device, wherein the performing the stream cipher operation on the data word comprises encrypting (1418) the data word, and/or streaming the data stream from the host device to the hardware accelerator (120, 220), wherein the performing the stream cipher operation on the data word comprises decrypting (1408) the data word.

18. A non-transitory computer-readable medium having contents which configure an interface (170; 270) of a hardware accelerator (120; 220) to perform operations of the method according to any one of claims 14 to 17.

## Patentansprüche

1. Hardware-Beschleuniger (120; 220; 420), umfassend:
eine Vielzahl von Funktionsschaltungen (124, 126; 224, 226);
eine Vielzahl von Streaming-Engines (128; 228), die mit der Vielzahl von Funktionsschaltungen (124, 126; 224, 226) gekoppelt sind, wobei die Vielzahl von Streaming-Engines (128; 228) im Betrieb Datenstreaming-Anfragen erzeugen, um Daten zu und von Funktionsschaltungen der Vielzahl von Funktionsschaltungen (124, 126; 224, 226) zu streamen; und eine Schnittstelle (170; 270), die mit der Vielzahl von Streaming-Engines (128; 228) gekoppelt ist,
wobei die Schnittstelle (170; 270) im Betrieb Stream-Chiffrier-Operationen an Datenwörtern durchführt, die den Datenstreaming-Anfragen zugeordnet sind,
wobei Durchführen einer Stream-Verschlüsselungsoperation an einem Datenwort beinhaltet:
Erzeugen (1412, 1422) einer Maske basierend auf einer Chiffrier-ID, die einer Streaming-Engine der Vielzahl von Streaming-Engines (128; 228) zugeordnet ist, einer Adresse, die dem Datenwort zugeordnet ist, und einen gespeicherten Schlüssel, welcher der Streaming-Engine der Vielzahl von Streaming-Engines (128; 228) zugeordnet ist; und
XOR-Verknüpfen der erzeugten Maske mit dem Datenwort.

2. Hardware-Beschleuniger (120; 220; 420) nach Anspruch 1, wobei:
- die Schnittstelle (170; 270) einen Pool von Stream-Verschlüsselungs-Engines (370) und Steuerschaltung (342) beinhaltet, und
- die Steuerschaltung (342) im Betrieb Durchführen durch Stromverschlüsselungs-Engines (372) des Pools von Stromverschlüsselungs-Engines (370) der Stream-Verschlüsselungsoperationen an den Datenwörtern, die den Datenstreaming-Anfragen zugeordnet sind, plant.

3. Hardware-Beschleuniger (120; 220; 420) nach Anspruch 1, wobei im Betrieb eine Chiffrier-ID, die einer Streaming-Engine der Vielzahl von Streaming-Engines (128; 228) zugeordnet ist, zu Beginn einer Verarbeitungszeit festgelegt wird.

4. Hardware-Beschleuniger (120; 220; 420) nach Anspruch 1, wobei die Schnittstelle (170; 270) im Betrieb Streaming-Engines der Vielzahl von Streaming-Engines (128; 228) mit einer Host-Vorrichtung koppelt.

5. Hardware-Beschleuniger (120; 220; 420) nach Anspruch 4, wobei:
- das Datenwort einer Datenstreaming-Anfrage zugeordnet ist, um Daten an den Hardware-Beschleuniger (120; 220) von der Host-Vorrichtung zu streamen, und
- Durchführen der Verschlüsselungsoperation an dem Datenwort das Dechiffrieren des Datenworts umfasst.

6. Hardware-Beschleuniger (120; 220; 420) nach Anspruch 1, umfassend:
Konfigurationsregister (237; 482), die im Betrieb Konfigurationsinformationen speichern, die einen jeweiligen Sicherheitszustand, der jeder Funktionsschaltung der Vielzahl von Funktionsschaltungen (124, 126; 224, 226) zugeordnet ist, und einen jeweiligen Sicherheitszustand angeben, der jeder Streaming-Engine der Vielzahl von Streaming-Engines (128; 228) zugeordnet ist, wobei in einem sicheren Betriebsmodus:
Funktionsschaltungen (126), die einem ersten Sicherheitszustand zugeordnet sind, auf Durchführen von Funktionsoperationen, die dem ersten Sicherheitszustand zugeordnet sind, beschränkt sind;
Streaming-Engines (128), die dem ersten Sicherheitszustand zugeordnet sind, auf Durchführen von Streaming-Operationen, die dem ersten Sicherheitszustand zugeordnet sind, beschränkt sind;
Funktionsschaltungen (226), die einem zweiten Sicherheitszustand zugeordnet sind, auf Durchführen von Funktionsoperationen, die dem zweiten Sicherheitszustand zugeordnet sind, beschränkt sind; und
Streaming-Engines (228), die dem zweiten Sicherheitszustand zugeordnet sind, auf Durchführen von Streaming-Operationen, die dem zweiten Sicherheitszustand zugeordnet sind, beschränkt sind.

7. Hardware-Beschleuniger (120; 220; 420) nach Anspruch 6, wobei:
der erste Sicherheitszustand ein sicherer Sicherheitszustand ist;
der zweite Sicherheitszustand ein nicht sicherer Sicherheitszustand ist;
Operationen, die dem ersten Sicherheitszustand zugeordnet sind, Operationen eines sicheren Netzwerks sind; und
Operationen, die dem zweiten Sicherheitszustand zugeordnet sind, Operationen eines nicht sicheren Netzwerks sind.

8. System (100), umfassend:
eine Host-Vorrichtung (102); und
einen Hardware-Beschleuniger (120; 220; 420) nach einem der Ansprüche 1 bis 7,
einen Stream-Schalter (122; 222), der zwischen der Vielzahl von Streaming-Engines (128; 228) und der Vielzahl von Funktionsschaltungen (124, 126; 224, 226) des Hardware-Beschleunigers (120; 220; 420) gekoppelt ist,
wobei die Host-Vorrichtung (102) und der Hardware-Beschleuniger (120; 220; 420) konfiguriert sind, um Daten dazwischen zu streamen.

9. System (100) nach Anspruch 8, wobei die Vielzahl von Funktionsschaltungen (124, 126; 224, 226) des Hardware-Beschleunigers (120, 220) einen oder mehrere Faltungsbeschleuniger (124; 224), eine oder mehrere Pooling-Schaltungen (226) und eine oder mehrere Aktivierungsschaltungen (226) beinhaltet.

10. System (100) nach Anspruch 9, wobei die Schnittstelle (170; 270) des Hardware-Beschleunigers (120, 220) einen Pool von Stream-Verschlüsselungs-Engines (170; 270) und Steuerschaltung (342) beinhaltet, und
wobei die Steuerschaltung (342) im Betrieb Durchführen durch Stream-Verschlüsselungs-Engines des Pools von Stream-Verschlüsselungs-Engines der Stream-Verschlüsselungsoperationen an den Datenwörtern plant, die Daten zugeordnet sind, die zwischen der Host-Vorrichtung und einer Streaming-Engine der Vielzahl von Streaming-Engines (128; 228) gestreamt werden.

11. System (100) nach Anspruch 8, wobei im Betrieb jeweilige Chiffrier-IDs, die Streaming-Engines der Vielzahl von Streaming-Engines (128; 228) zugeordnet sind, zu Beginn einer Verarbeitungszeit initialisiert werden.

12. System (100) nach Anspruch 11, wobei im Betrieb eine Chiffrier-ID, die einer Streaming-Engine der Vielzahl von Streaming-Engines (128; 228) zugeordnet ist, zwischen Runden iterativer Verarbeitung der Verarbeitungszeit inkrementiert wird.

13. System (100) nach Anspruch 8, umfassend eine integrierte Schaltung, welche die Host-Vorrichtung und den Hardware-Beschleuniger (120) beinhaltet.

14. Verfahren, umfassend:
Streamen von Datenstreams zwischen Streaming-Engines einer Vielzahl von Streaming-Engines (128; 228) eines Hardware-Beschleunigers (120; 220) und Funktionsschaltungen (124, 126; 224, 226) einer Vielzahl von Funktionsschaltungen des Hardware-Beschleunigers (120, 220); und
Streamen von Datenstreams zwischen einer Host-Vorrichtung und Streaming-Engines der Vielzahl von Streaming-Engines (128; 228) des Hardware-Beschleunigers (120; 220) über eine Schnittstelle (170; 270) des Hardware-Beschleunigers (120, 220), wobei das Streamen eines Datenstreams zwischen der Host-Vorrichtung und einer Streaming-Engine der Vielzahl von Streaming-Engines (128; 228) Durchführen von Stream-Verschlüsselungsoperationen an Datenwörtern des Datenstreams beinhaltet, und
wobei Durchführen einer Stream-Verschlüsselungsoperation an einem Datenwort beinhaltet:
Erzeugen (1412, 1422) einer Maske basierend auf einer Chiffrier-ID, die der Streaming-Engine der Vielzahl von Streaming-Engines (128; 228) zugeordnet ist, einer Adresse, die dem Datenwort zugeordnet ist, und einem gespeicherten Schlüssel, welcher der Streaming-Engine der Vielzahl von Streaming-Engines (128; 228) zugeordnet ist; und
XOR-Verknüpfen der erzeugten Maske mit dem Datenwort.

15. Verfahren nach Anspruch 14, wobei die Schnittstelle (170; 270) einen Pool von Keccak-Stream-Verschlüsselungs-Engines (370) beinhaltet, und wobei das Verfahren Planen von Durchführen durch eine Stream-Verschlüsselungs-Engine (372) des Pools von Keccak-Stream-Verschlüsselungs-Engines (370) der Stream-Verschlüsselungsoperation an dem Datenwort umfasst.

16. Verfahren nach Anspruch 14, umfassend das Festlegen einer jeweiligen Chiffrier-ID, die jeder Streaming-Engine der Vielzahl von Streaming-Engines (128; 228) zu Beginn einer Verarbeitungszeit durch den Hardware-Beschleuniger (120, 220) zugeordnet ist.

17. Verfahren nach Anspruch 15, umfassend Streamen des Daten-Streams vom Hardware-Beschleuniger (120; 220) zur Host-Vorrichtung, wobei das Durchführen der Stream-Verschlüsselungsoperation an dem Datenwort Chiffrieren (1418) des Datenworts und/oder Streamen des Daten-Streams von der Host-Vorrichtung zum Hardware-Beschleuniger (120, 220) umfasst, wobei das Durchführen der Stream-Verschlüsselungsoperation an dem Datenwort Dechiffrieren (1408) des Datenworts umfasst.

18. Nichtflüchtiges, computerlesbares Medium das Inhalte aufweist, die eine Schnittstelle (170; 270) eines Hardware-Beschleunigers (120; 220) konfigurieren, um Operationen des Verfahrens nach einem der Ansprüche 14 bis 17 durchzuführen.

## Revendications

1. Accélérateur matériel (120 ; 220 ; 420), comprenant :
une pluralité de circuits fonctionnels (124, 126 ; 224, 226) ;
une pluralité de moteurs de diffusion en continu (128 ; 228) couplés à la pluralité de circuits fonctionnels (124, 126 ; 224, 226), dans lequel la pluralité de moteurs de diffusion en continu (128 ; 228), en fonctionnement, génèrent des requêtes de diffusion en continu de données pour diffuser en continu des données vers et en provenance de circuits fonctionnels de la pluralité de circuits fonctionnels (124, 126 ; 224, 226) ; et
une interface (170 ; 270) couplée à la pluralité de moteurs de diffusion en continu (128 ; 228),
dans lequel l'interface (170 ; 270), en fonctionnement, réalise des opérations de chiffrement de diffusion en continu sur des mots de données associés aux requêtes de diffusion en continu de données,
dans lequel la réalisation d'une opération de chiffrement de diffusion en continu sur un mot de données comporte :
la génération (1412, 1422) d'un masque sur la base d'un identifiant, ID, de chiffrement associé à un moteur de diffusion en continu de la pluralité de moteurs de diffusion en continu (128 ; 228), d'une adresse associée au mot de données, et d'une clé stockée associée au moteur de diffusion en continu de la pluralité de moteurs de diffusion en continu (128 ; 228) ; et
la réalisation d'une opération OU exclusif, XOR, sur le masque généré avec le mot de données.

2. Accélérateur matériel (120 ; 220 ; 420) selon la revendication 1, dans lequel :
- l'interface (170 ; 270) comporte un groupe de moteurs de chiffrement de diffusion en continu (370) et une circuiterie de commande (342), et
- la circuiterie de commande (342), en fonctionnement, ordonnance la réalisation, par des moteurs de chiffrement de diffusion en continu (372) du groupe de moteurs de chiffrement de diffusion en continu (370), des opérations de chiffrement de diffusion en continu sur les mots de données associés aux requêtes de diffusion en continu de données.

3. Accélérateur matériel (120 ; 220 ; 420) selon la revendication 1, dans lequel, en fonctionnement, un ID de chiffrement associé à un moteur de diffusion en continu de la pluralité de moteurs de diffusion en continu (128 ; 228) est défini au début d'une période de traitement.

4. Accélérateur matériel (120 ; 220 ; 420) selon la revendication 1, dans lequel l'interface (170 ; 270), en fonctionnement, couple des moteurs de diffusion en continu de la pluralité de moteurs de diffusion en continu (128 ; 228) à un dispositif hôte.

5. Accélérateur matériel (120 ; 220 ; 420) selon la revendication 4, dans lequel :
- le mot de données est associé à une requête de diffusion en continu de données pour diffuser en continu des données vers l'accélérateur matériel (120 ; 220) à partir du dispositif hôte, et
- la réalisation de l'opération de chiffrement sur le mot de données comprend le déchiffrement du mot de données.

6. Accélérateur matériel (120 ; 220 ; 420) selon la revendication 1, comprenant :
des registres de configuration (237 ; 482), qui, en fonctionnement, stockent des informations de configuration indiquant un état de sécurité respectif associé à chaque circuit fonctionnel de la pluralité de circuits fonctionnels (124, 126 ; 224, 226) et un état de sécurité respectif associé à chaque moteur de diffusion en continu de la pluralité de moteurs de diffusion en continu (128 ; 228),
dans lequel, dans un mode de fonctionnement sécurisé :
des circuits fonctionnels (126) associés à un premier état de sécurité sont restreints à la réalisation d'opérations fonctionnelles associées au premier état de sécurité ;
des moteurs de diffusion en continu (128) associés au premier état de sécurité sont restreints à la réalisation d'opérations de diffusion en continu associées au premier état de sécurité ;
des circuits fonctionnels (226) associés à un second état de sécurité sont restreints à la réalisation d'opérations fonctionnelles associées au second état de sécurité ; et
des moteurs de diffusion en continu (228) associés au second état de sécurité sont restreints à la réalisation d'opérations de diffusion en continu associées au second état de sécurité.

7. Accélérateur matériel (120 ; 220 ; 420) selon la revendication 6, dans lequel :
le premier état de sécurité est un état de sécurité sécurisé ;
le second état de sécurité est un état de sécurité non sécurisé ;
les opérations associées au premier état de sécurité sont des opérations d'un réseau sécurisé ; et
les opérations associées au second état de sécurité sont des opérations d'un réseau non sécurisé.

8. Système (100), comprenant :
un dispositif hôte (102) ; et
un accélérateur matériel (120 ; 220 ; 420) selon l'une quelconque des revendications 1 à 7,
un commutateur de diffusion en continu (122 ; 222) couplé entre la pluralité de moteurs de diffusion en continu (128 ; 228) et la pluralité de circuits fonctionnels (124, 126 ; 224, 226) de l'accélérateur matériel (120 ; 220 ; 420), dans lequel le dispositif hôte (102) et l'accélérateur matériel (120 ; 220 ; 420) sont configurés pour diffuser en continu des données entre eux.

9. Système (100) selon la revendication 8, dans lequel la pluralité de circuits fonctionnels (124, 126 ; 224, 226) de l'accélérateur matériel (120, 220) comporte un ou plusieurs accélérateurs à convolution (124 ; 224), un ou plusieurs circuits de regroupement (226), et un ou plusieurs circuits d'activation (226).

10. Système (100) selon la revendication 9, dans lequel l'interface (170 ; 270) de l'accélérateur matériel (120, 220) comporte un groupe de moteurs de chiffrement de diffusion en continu (170 ; 270) et une circuiterie de commande (342), et
dans lequel la circuiterie de commande (342), en fonctionnement, ordonnance la réalisation, par des moteurs de chiffrement de diffusion en continu du groupe de moteurs de chiffrement de diffusion en continu, des opérations de chiffrement de diffusion en continu sur les mots de données associés à des données diffusées en continu entre le dispositif hôte et un moteur de diffusion en continu de la pluralité de moteurs de diffusion en continu (128 ; 228).

11. Système (100) selon la revendication 8, dans lequel, en fonctionnement, des ID de chiffrement respectifs associés à des moteurs de diffusion en continu de la pluralité de moteurs de diffusion en continu (128 ; 228) sont initialisés au début d'une période de traitement.

12. Système (100) selon la revendication 11, dans lequel, en fonctionnement, un ID de chiffrement associé à un moteur de diffusion en continu de la pluralité de moteurs de diffusion en continu (128 ; 228) est incrémenté entre des cycles de traitement itératif de la période de traitement.

13. Système (100) selon la revendication 8, comprenant un circuit intégré comportant le dispositif hôte et l'accélérateur matériel (120).

14. Procédé, comprenant :
la diffusion en continu de diffusions en continu de données entre des moteurs de diffusion en continu d'une pluralité de moteurs de diffusion en continu (128 ; 228) d'un accélérateur matériel (120 ; 220) et des circuits fonctionnels (124, 126 ; 224, 226) d'une pluralité de circuits fonctionnels de l'accélérateur matériel (120, 220) ; et
la diffusion en continu de diffusions en continu de données entre un dispositif hôte et des moteurs de diffusion en continu de la pluralité de moteurs de diffusion en continu (128 ; 228) de l'accélérateur matériel (120 ; 220) via une interface (170 ; 270) de l'accélérateur matériel (120, 220), dans lequel la diffusion en continu d'une diffusion en continu de données entre le dispositif hôte et un moteur de diffusion en continu de la pluralité de moteurs de diffusion en continu (128 ; 228) comporte la réalisation d'opérations de chiffrement de diffusion en continu sur des mots de données de la diffusion en continu de données, et
dans lequel la réalisation d'une opération de chiffrement de diffusion en continu sur un mot de données comporte :
la génération (1412, 1422) d'un masque sur la base d'un ID de chiffrement associé au moteur de diffusion en continu de la pluralité de moteurs de diffusion en continu (128 ; 228), d'une adresse associée au mot de données, et d'une clé stockée associée au moteur de diffusion en continu de la pluralité de moteurs de diffusion en continu (128 ; 228) ; et
la réalisation d'une opération OU exclusif, XOR, sur le masque généré avec le mot de données.

15. Procédé selon la revendication 14, dans lequel l'interface (170 ; 270) comporte un groupe de moteurs de chiffrement de diffusion en continu keccak (370), et dans lequel le procédé comprend l'ordonnancement de la réalisation, par un moteur de chiffrement de diffusion en continu (372) du groupe de moteurs de chiffrement de diffusion en continu keccak (370), de l'opération de chiffrement de diffusion en continu sur le mot de données.

16. Procédé selon la revendication 14, comprenant la définition d'un ID de chiffrement respectif associé à chaque moteur de diffusion en continu de la pluralité de moteurs de diffusion en continu (128 ; 228) au début d'une période de traitement par l'accélérateur matériel (120, 220).

17. Procédé selon la revendication 15, comprenant la diffusion en continu de la diffusion en continu de données, de l'accélérateur matériel (120 ; 220) au dispositif hôte, dans lequel la réalisation de l'opération de chiffrement de diffusion en continu sur le mot de données comprend le chiffrement (1418) du mot de données, et/ou la diffusion en continu de la diffusion en continu de données, du dispositif hôte à l'accélérateur matériel (120, 220), dans lequel la réalisation de l'opération de chiffrement de diffusion en continu sur le mot de données comprend le déchiffrement (1408) du mot de données.

18. Support non transitoire lisible par ordinateur ayant un contenu qui configure une interface (170 ; 270) d'un accélérateur matériel (120 ; 220) afin qu'il réalise les opérations du procédé selon l'une quelconque des revendications 14 à 17.
